# FASCICULE DE BREVET EUROPEEN

(11) **EP 1 169 842 B1**
(45) Date de publication et mention de la délivrance du brevet: **12.05.2004**
(21) Numéro de dépôt: 01921492.3
(22) Date de dépôt: 05.04.2001
(51) Int. Cl.: H04M 3/533

(54) **MESSAGERIE ANONYME AU MOYEN DE TELEPHONES MOBILES**
ANONYMER NACHRICHTENAUSTAUSCH MIT MOBILTELEFONEN
ANONYMOUS MESSAGING USING MOBILE TELEPHONES

(30) Priorité: 26.04.2000 FR 0005302
(43) Date de publication de la demande: 09.01.2002
(73) Titulaire: Freever, 75008 Paris (FR)
(72) Inventeur: TISSOT, Philippe, F-75116 Paris (FR)
(74) Mandataire: Grynwald, Albert
(86) Numéro de dépôt international: PCT/FR2001/001032
(87) Numéro de publication internationale: WO 2001/082575

(56) Documents cités:
- EP-A- 0 342 314
- EP-A- 0 817 457
- EP-A- 0 910 223
- EP-A- 0 984 608

## Description

La présente invention concerne un procédé permettant aux utilisateurs de téléphones mobiles d'échanger de manière anonyme des messages en employant des commandes simples ne nécessitant pas l'utilisation de mots-clés.

Les réseaux de communication informatique du type Internet sont couramment utilisés pour échanger des messages-textes. Les techniques employées sont du type forum ou chat ou mel.

Les échanges de messages-textes commencent à apparaître en téléphonie mobile. Les utilisateurs de téléphones mobiles aimeraient pouvoir échanger anonymement des messages en employant des commandes simples à utiliser. Ils aimeraient également pouvoir se regrouper par forums de discussion thématiques, géographiques ou démographiques. En outre, l'anonymat est indispensable pour élargir au maximum le cercle des intéressés.

Par conséquent, il est nécessaire de disposer d'outils permettant de créer, de transmettre à un serveur et de rechercher les pseudonymes que les utilisateurs de téléphones mobiles emploient afin de garder l'anonymat.

Par ailleurs, dans le domaine de la téléphonie mobile, il est souhaitable de pouvoir échanger des messages voix ou des données (images, pictogrammes, photos...) aussi bien que des messages-textes.

Aujourd'hui, pour échanger des messages entre utilisateurs anonymes sur un réseau de téléphonie mobile, un abonné GSM n'a pas d'autre solution que de connaître les procédures d'envoi spécifiques aux services de messagerie anonyme, notamment les procédures SMS (Short Message System).

Les procédures spécifiques aux systèmes de messagerie anonyme sont complexes et peu intuitives. Elles mettent en oeuvre des mots clés (ou commandes) à insérer dans le texte du message (send, list, group, etc.). Ces mots clés sont interprétés par un serveur spécifique.

Il en résulte que le système des messageries anonymes de la téléphonie mobile n'est utilisé que par un très petit nombre d'abonnés qui sont capables de mémoriser les commandes et leurs fonctions. De même, peu d'opérateurs de télécommunications offrent ce type de service du fait de sa complexité pour l'utilisateur final.

Il a été décrit dans la demande de brevet EP-A-0 342 314 (TELEPHONE CONNECTION) publiée le 23 novembre 1989 un procédé pour établir des communications téléphoniques. Ce système n'est pas approprié pour pouvoir échanger anonymement des messages en employant des commandes simples à utiliser. Il ne permet pas de créer, de transmettre à un serveur et de rechercher les pseudonymes que les utilisateurs de téléphones mobiles emploient afin de garder l'anonymat.

La solution, selon l'invention, protège l'anonymat tout en simplifiant les procédures d'échange de messages.

L'invention concerne un procédé permettant aux utilisateurs de téléphones mobiles d'échanger de manière anonyme des messages en employant des commandes simples ne nécessitant pas l'utilisation de mots-clés.

Le procédé comporte plusieurs étapes :

Il comporte l'étape **(I)** d'envoyer à un utilisateur destinataire un message élaboré par un utilisateur émetteur.

Il comporte en outre l'étape **(II)** de répondre à l'utilisateur émetteur en lui adressant un message-réponse élaboré par l'utilisateur destinataire.

L'étape **(I)** d'envoyer à un utilisateur destinataire un message élaboré par un utilisateur émetteur comporte elle-même plusieurs étapes.

Elle comporte l'étape **(Ia)** de mémoriser dans une base de données d'un serveur-routeur des pseudos désignant les utilisateurs ainsi que les adresses téléphoniques des téléphones mobiles des utilisateurs.

Elle comporte en outre l'étape **(Ib)** d'insérer, au moyen du téléphone mobile de l'utilisateur émetteur, le pseudo de l'utilisateur destinataire dans un message-texte associé au message.

Elle comporte en outre l'étape **(Ic)** de transmettre, au moyen du téléphone mobile de l'utilisateur émetteur, le message-texte au serveur-routeur ainsi que le message.

Elle comporte en outre l'étape **(Id),** pour le serveur-routeur, de détecter dans le message-texte la présence d'un pseudo et de rechercher, dans la base de données, l'adresse téléphonique du téléphone mobile de l'utilisateur destinataire.

Elle comporte en outre l'étape **(Ie) ,** pour le serveur-routeur, de router le message-texte ainsi que le message vers le téléphone mobile de l'utilisateur destinataire.

Ainsi, l'utilisateur destinataire reçoit le message émis par l'utilisateur émetteur sans que celui-ci :
- ne divulgue son identité et/ou ne connaisse l'identité de l'utilisateur destinataire,
- n'utilise des commandes textes pour effectuer l'envoi du message.

De préférence, l'étape **(Ia)** de mémoriser dans une base de données d'un serveur-routeur des pseudos désignant les utilisateurs ainsi que les adresses téléphoniques des téléphones mobiles des utilisateurs comprend l'étape pour l'utilisateur concerné de transmettre son pseudo au serveur-routeur, notamment lors de l'établissement de la première interconnexion, ou également par Web, mel, ou DTMF.

Dans une première variante de réalisation, le pseudo est composé en ajoutant à un mot une balise telle que notamment un astérisque*.

Ainsi, par exemple, le message : "*Gilles. Tu as rendez-vous avec Philippe lundi" sera interprété par le serveur-routeur comme contenant l'instruction d'envoyer le message à l'adresse téléphonique du pseudo *Gilles.

Dans une seconde variante de réalisation, le pseudo est défini par sa position dans le message, notamment la première.

Ainsi, par exemple, le message : "Gilles Christian Vous avez rendez-vous avec Philippe lundi" sera interprété par le serveur-routeur comme contenant l'instruction d'envoyer le message aux adresses téléphoniques des pseudos Gilles et Christian. En effet, Gilles et Christian sont des pseudos figurant dans la base de données du serveur-routeur et sont situés au début du message.

De préférence, l'étape **(Ia)** de mémoriser dans une base de données d'un serveur-routeur des pseudos désignant les utilisateurs ainsi que les adresses téléphoniques des téléphones mobiles des utilisateurs comprend l'étape de mémoriser les identifiants et/ou le pseudo d'un groupe ainsi que les adresses du serveur hébergeant le groupe et/ou les adresses téléphoniques des téléphones mobiles des utilisateurs membres du groupe.

Ainsi, les messages sont routés directement ou indirectement par le serveur-routeur vers les utilisateurs membres du groupe.

Le procédé est caractérisé en ce que l'étape **(II)** de répondre à l'utilisateur émetteur en lui adressant un message-réponse élaboré par l'utilisateur destinataire comprend plusieurs étapes.

Elle comprend l'étape **(IIa)** de mémoriser dans le serveur-routeur l'adresse téléphonique du téléphone mobile de l'utilisateur émetteur ainsi que l'adresse téléphonique du téléphone mobile de l'utilisateur destinataire.

Elle comprend en outre l'étape **(IIb)** de mémoriser dans le téléphone mobile de l'utilisateur destinataire l'adresse téléphonique du serveur-routeur.

Ainsi, en actionnant la commande "répondre" de son téléphone mobile (cf. nota), l'utilisateur destinataire provoque l'émission du message-réponse qu'il a élaboré vers le serveur-routeur, lequel route le message-réponse vers le téléphone mobile de l'utilisateur émetteur en préservant l'anonymat de l'utilisateur émetteur et de l'utilisateur destinataire. Nota : on rappelle que les téléphones mobiles comportent une commande "répondre" dont l'actionnement produit l'émission d'un message-réponse vers l'adresse téléphonique de l'émetteur du message d'origine.

Le procédé selon l'invention est plus particulièrement destiné à permettre à un utilisateur destinataire de répondre à plusieurs utilisateurs émetteurs qui lui ont adressé un ou plusieurs messages.

Le procédé est caractérisé en ce que, pour transmettre à l'utilisateur destinataire les messages provenant des différents utilisateurs émetteurs, le serveur-routeur utilise des adresses téléphoniques de sortie différentes pour chaque utilisateur émetteur.

Le procédé est en outre caractérisé en ce que le serveur-routeur mémorise les adresses téléphoniques des utilisateurs émetteurs des messages qu'il route, en attribuant une zone mémoire déterminée pour chaque adresse téléphonique de sortie.

Ainsi, en actionnant la commande "répondre" l'utilisateur destinataire provoque l'émission du message-réponse qu'il a élaboré vers l'adresse téléphonique de sortie du serveur-routeur associée à l'adressé téléphonique de l'utilisateur émetteur. Le serveur-routeur route ensuite le message-réponse vers l'utilisateur émetteur du message d'origine.

De préférence, le serveur-routeur mémorise l'adresse téléphonique de l'utilisateur émetteur du dernier message qu'il route via une adresse téléphonique de sortie déterminée.

Ainsi, dans le cas où le nombre de messages adressés à un utilisateur destinataire est supérieur au nombre d'adresses téléphoniques de sortie du serveur routeur, les utilisateurs émetteurs qui seront éliminés seront ceux qui, pour une adresse de sortie déterminée, ont l'antériorité la plus ancienne.

Dans une première variante de réalisation, le procédé est caractérisé en ce que le serveur-routeur efface après une période de temps déterminée les adresses téléphoniques des utilisateurs émetteurs auxquels l'utilisateur destinataire n'a pas répondu.

Ainsi, dans le cas où le nombre de messages adressés à un utilisateur destinataire est supérieur au nombre d'adresses téléphoniques de sortie du serveur routeur, les utilisateurs émetteurs qui seront éliminés seront ceux dont l'antériorité excède une date prédéterminée.

Dans une deuxième variante de réalisation, le procédé est caractérisé en ce que le serveur-routeur efface l'adresse téléphonique de l'utilisateur émetteur le plus ancien auquel l'utilisateur destinataire n'a pas répondu.

Ainsi, dans le cas où le nombre de messages adressés à un utilisateur destinataire est supérieur au nombre d'adresses téléphoniques de sortie du serveur routeur, les utilisateurs émetteurs qui seront éliminés seront ceux qui ont l'antériorité la plus ancienne.

Dans une troisième variante de réalisation, le procédé est caractérisé en ce que le serveur-routeur efface l'adresse téléphonique de l'utilisateur émetteur auquel l'utilisateur destinataire a répondu.

Ainsi, le serveur-routeur libère des adresses téléphoniques de sortie.

Le procédé est plus particulièrement destiné à permettre à un utilisateur destinataire membre d'un forum de recevoir des messages du forum et de répondre.

Le procédé est caractérisé en ce que, pour transmettre à l'utilisateur destinataire les messages provenant du forum, le serveur-routeur utilise une adresse téléphonique de sortie commune pour tous les messages du forum.

Ainsi, tous les messages entrant ou sortant entre le forum et le membre concerné transitent par une adresse téléphonique unique et ont pour utilisateur destinataire soit l'utilisateur destinataire (membre du forum), s'ils proviennent du serveur, soit le forum, s'ils proviennent de l'utilisateur destinataire.

De préférence, les adresses téléphoniques de sortie du serveur-routeur se présentent notamment sous la forme de canaux de multiplexage.

De préférence, pour échanger de manière anonyme des messages audio, le procédé comprend plusieurs étapes.

Il comprend l'étape d'émettre en mode DTMF le pseudo de l'utilisateur destinataire ou du groupe ou du forum.

Il comprend en outre l'étape de transmettre le pseudo en mode DTMF vers un serveur-routeur-vocal.

De préférence, pour émettre en mode DTMF le pseudo de l'utilisateur destinataire ou du groupe ou du forum, le procédé comprend plusieurs étapes.

Il comprend l'étape d'envoyer au téléphone mobile de l'utilisateur émetteur, à partir du serveur-routeur-vocal, une requête d'envoi du pseudo en mode DTMF.

Il comprend en outre l'étape d'entrer, au moyen du clavier du téléphone mobile de l'utilisateur émetteur, la première lettre du pseudo de l'utilisateur destinataire et ainsi de suite.

Ainsi, par exemple, le pseudo "musik" sera entré par l'utilisateur émetteur en mode DTMF en utilisant successivement les touches portant les chiffres : 68745

L'invention concerne également un système permettant aux utilisateurs de téléphones mobiles d'échanger de manière anonyme des messages en employant des commandes simples ne nécessitant pas l'utilisation de mots-clés.

Le système comprend des moyens de mémorisation pour mémoriser dans une base de données d'un serveur-routeur des pseudos désignant les utilisateurs ainsi que les adresses téléphoniques des téléphones mobiles des utilisateurs.

Le système comprend en outre des moyens d'émission pour envoyer à un utilisateur destinataire un message texte ou audio élaboré par un utilisateur émetteur.

Le système comprend en outre des moyens de réponse pour adresser à l'utilisateur émetteur un message-réponse élaboré par l'utilisateur destinataire.

Les moyens d'émission, pour envoyer à un utilisateur destinataire un message élaboré par un utilisateur émetteur, comportent des moyens d'insertion pour insérer le pseudo de l'utilisateur destinataire dans un message-texte associé au message.

Les moyens d'émission comportent en outre des moyens de transmission pour transmettre le message-texte au serveur-routeur ainsi que le message.

Le serveur-routeur comporte des moyens de détection pour détecter dans le message-texte la présence d'un pseudo et de rechercher dans la base de données l'adresse téléphonique du téléphone mobile de l'utilisateur destinataire.

Le serveur-routeur comporte en outre des moyens de routage pour router le message-texte ainsi que le message vers le téléphone mobile de l'utilisateur destinataire

Ainsi, utilisateur destinataire reçoit le message émis par l'utilisateur émetteur sans que celui-ci :
- ne divulgue son identité et/ou ne connaisse l'identité de l'utilisateur destinataire,
- n'utilise des commandes textes pour effectuer l'envoi du message.

De préférence, pour mémoriser dans une base de données d'un serveur-routeur des pseudos désignant les utilisateurs ainsi que les adresses téléphoniques des téléphones mobiles des utilisateurs, le téléphone mobile de l'utilisateur concerné comporte des moyens de transmission pour transmettre son pseudo au serveur-routeur notamment lors de l'établissement de la première interconnexion ou également par Web, mel, ou DTMF.

Dans une première variante de réalisation, le pseudo est composé en ajoutant à un mot une balise telle que notamment un astérisque*.

Ainsi, par exemple, le message : "*Gilles. Tu as rendez-vous avec Philippe lundi" sera interprété par le serveur-routeur comme contenant l'instruction d'envoyer le message à l'adresse téléphonique du pseudo *Gilles.

Dans une seconde variante de réalisation, le pseudo est défini par sa position dans le message, notamment la première.

Ainsi, par exemple, le message : "Gilles Christian Vous avez rendez-vous avec Philippe lundi" sera interprété par le serveur-routeur comme contenant l'instruction d'envoyer le message aux adresses téléphoniques des pseudos Gilles et Christian. En effet, Gilles et Christian sont des pseudos figurant dans la base de données du serveur-routeur et sont situés au début du message.

De préférence, les moyens de mémorisation mémorisent les identifiants et/ou le pseudo d'un groupe ainsi que les adresses du serveur hébergeant le groupe et/ou les adresses téléphoniques des téléphones mobiles des utilisateurs membres du groupe.

Ainsi, les messages sont routés directement ou indirectement par le serveur-routeur vers les utilisateurs membres du groupe.

Pour transmettre à utilisateur émetteur le message-réponse élaboré par utilisateur destinataire, le système comprend des moyens de mémorisation-serveur-routeur pour mémoriser dans le serveur-routeur l'adresse téléphonique du téléphone mobile de l'utilisateur émetteur ainsi que l'adresse téléphonique du téléphone mobile de l'utilisateur destinataire

Le système comprend en outre des moyens de mémorisation-téléphone-mobile pour mémoriser dans le téléphone mobile de l'utilisateur destinataire l'adresse téléphonique du serveur-routeur.

Ainsi, en actionnant la commande "répondre" de son téléphone mobile (cf. nota), utilisateur destinataire provoque l'émission du message-réponse qu'il a élaboré vers le serveur-routeur, lequel route le message-réponse vers le téléphone mobile de l'utilisateur émetteur en préservant l'anonymat de l'utilisateur émetteur et de l'utilisateur destinataire Nota : on rappelle que les téléphones mobiles comportent une commande "répondre", dont l'actionnement produit l'émission d'un message réponse vers l'adresse téléphonique de l'émetteur du message d'origine.

Le système est plus particulièrement destiné à permettre à un utilisateur destinataire de répondre à plusieurs utilisateurs émetteurs qui lui ont adressé un ou plusieurs messages.

Le système est tel que le serveur-routeur comporte plusieurs adresses téléphoniques de sortie, des moyens de calcul pour attribuer des adresses téléphoniques de sortie différentes pour chaque utilisateur émetteur et des moyens de mémorisation pour mémoriser les adresses téléphoniques des utilisateurs émetteurs des messages qu'il route, en attribuant une zone mémoire déterminée pour chaque adresse téléphonique de sortie.

Ainsi, en actionnant la commande "répondre" l'utilisateur destinataire provoque l'émission du message-réponse qu'il a élaboré vers l'adresse téléphonique de sortie du serveur-routeur associée à l'adresse téléphonique de l'utilisateur émetteur Le serveur-routeur route ensuite le message-réponse vers utilisateur émetteur du message d'origine.

De préférence, les moyens de mémorisation-serveur-routeur mémorisent l'adresse téléphonique de l'utilisateur émetteur du dernier message qu'il route via une adresse téléphonique de sortie déterminée.

Ainsi, dans le cas où le nombre de messages adressés à un utilisateur destinataire est supérieur au nombre d'adresses téléphoniques de sortie du serveur-routeur, les utilisateurs émetteurs qui seront éliminés seront ceux qui, pour une adresse de sortie déterminée, ont l'antériorité la plus ancienne.

Dans une première variante de réalisation, le serveurrouteur comporte des moyens pour effacer après une période de temps déterminée les adresses téléphoniques des utilisateurs émetteurs auxquels utilisateur destinataire n'a pas répondu.

Ainsi, dans le cas où le nombre de messages adressés à un utilisateur destinataire est supérieur au nombre d'adresses téléphoniques de sortie, du serveur-routeur, les utilisateurs émetteurs qui seront éliminés seront ceux dont l'antériorité excède une date prédéterminée.

Dans une deuxième variante de réalisation, le serveur-routeur comporte des moyens pour effacer l'adresse téléphonique de l'utilisateur émetteur le plus ancien auquel utilisateur destinataire n'a pas répondu.

Ainsi, dans le cas où le nombre de messages adressés à un utilisateur destinataire est supérieur au nombre d'adresses téléphoniques de sortie du serveur-routeur, les utilisateurs émetteurs qui seront éliminés seront ceux qui ont l'antériorité la plus ancienne.

Dans une troisième variante de réalisation, le serveur-routeur comporte des moyens pour effacer l'adresse téléphonique de l'utilisateur émetteur auquel utilisateur destinataire a répondu.

Ainsi, le serveur-routeur libère des adresses téléphoniques de sortie.

Le système, selon l'invention, est plus particulièrement destiné à permettre à un utilisateur destinataire membre d'un forum de recevoir des messages du forum et de répondre.

Le système est caractérisé en ce que le serveur-routeur comporte une adresse téléphonique de sortie commune pour tous les messages du forum.

Ainsi, tous les messages entrant ou sortant entre le forum et le membre concerné transitent par une adresse téléphonique unique et ont pour utilisateurs destinataires soit l'utilisateur destinataire (membre du forum), s'ils proviennent du serveur, soit le forum, s'ils proviennent de l'utilisateur destinataire.

De préférence, les adresses téléphoniques de sortie du serveur-routeur se présentent notamment sous la forme de canaux de multiplexage.

De préférence, pour échanger de manière anonyme des messages audio, les téléphones mobiles comprennent des moyens d'émission pour émettre en mode DTMF le pseudo de l'utilisateur destinataire ou du groupe ou du forum.

Les téléphones mobiles comprennent en outre des moyens de transmission pour transmettre le pseudo en mode DTMF vers un serveur-routeur-vocal.

De préférence, pour émettre en mode DTMF le pseudo de l'utilisateur destinataire ou du groupe ou du forum, le serveur-routeur-vocal comporte des moyens de transmission pour envoyer au téléphone mobile de l'utilisateur émetteur une requête d'envoi du pseudo en mode DTMF.

Également, pour émettre en mode DTMF le pseudo de l'utilisateur destinataire ou du groupe ou du forum, le téléphone mobile comporte des moyens d'entrée de données, notamment un clavier.

Ainsi, utilisateur émetteur peut entrer au moyen du clavier de son téléphone mobile la première lettre du pseudo de l'utilisateur destinataire et ainsi de suite.

Ainsi, par exemple, le pseudo "musik" sera entré par utilisateur émetteur en mode DTMF en utilisant successivement les touches portant les chiffres : 68745.

L'invention concerne également un serveur-routeur permettant aux utilisateurs de téléphones mobiles d'échanger de manière anonyme des messages en employant des commandes simples ne nécessitant pas l'utilisation de mots-clés.

Le serveur-routeur comprend des moyens de mémorisation pour mémoriser dans une base de données des pseudos désignant les utilisateurs ainsi que les adresses téléphoniques des téléphones mobiles des utilisateurs.

L'utilisateur émetteur envoie à un utilisateur destinataire un message-texte comprenant le pseudo de l'utilisateur destinataire.

L'utilisateur destinataire adresse à l'utilisateur émetteur un message-réponse.

Le serveur-routeur comporte en outre des moyens de réception pour recevoir le message-texte ainsi que le message.

Le serveur-routeur comporte en outre des moyens de détection pour détecter dans le message-texte la présence d'un pseudo et de rechercher dans la base de données l'adresse téléphonique du téléphone mobile de l'utilisateur destinataire.

Le serveur-routeur comporte en outre des moyens de routage pour router le message-texte ainsi que le message vers le téléphone mobile de l'utilisateur destinataire

Ainsi, l'utilisateur destinataire reçoit le message émis par l'utilisateur émetteur sans que celui-ci :
- ne divulgue son identité et/ou ne connaisse l'identité de l'utilisateur destinataire,
- n'utilise des commandes textes pour effectuer l'envoi du message.

De préférence, pour mémoriser dans une base de données du serveur-routeur des pseudos désignant les utilisateurs ainsi que les adresses téléphoniques des téléphones mobiles des utilisateurs, les téléphones mobiles des utilisateurs concernés transmettent leur pseudo au serveur-routeur notamment lors de l'établissement de la première interconnexion ou également par Web, mel, ou DTMF.

Dans une première variante de réalisation, le pseudo est composé en ajoutant à un mot une balise telle que notamment un astérisque*.

Ainsi, par exemple, le message : "*Gilles. Tu as rendez-vous avec Philippe lundi" sera interprété par le serveur-routeur comme contenant l'instruction d'envoyer le message à l'adresse téléphonique du pseudo *Gilles.

Dans une seconde variante de réalisation, le pseudo est défini par sa position dans le message, notamment la première.

Ainsi, par exemple, le message : "Gilles Christian Vous avez rendez-vous avec Philippe lundi" sera interprété par le serveur-routeur comme contenant l'instruction d'envoyer le message aux adresses téléphoniques des pseudos Gilles et Christian. En effet, Gilles et Christian sont des pseudos figurant dans la base de données du serveur-routeur et sont situés au début du message.

De préférence, les moyens de mémorisation mémorisent les identifiants et/ou le pseudo d'un groupe ainsi que les adresses du serveur hébergeant le groupe et/ou les adresses téléphoniques des téléphones mobiles des utilisateurs membres du groupe.

Ainsi, les messages sont routés directement ou indirectement par le serveur-routeur vers les utilisateurs membres du groupe.

De préférence, le serveur-routeur est caractérisé en ce qu'il comporte des moyens de mémorisation pour mémoriser l'adresse téléphonique du téléphone mobile de l'utilisateur émetteur ainsi que l'adresse téléphonique du téléphone mobile de l'utilisateur destinataire Le téléphoné mobile de l'utilisateur destinataire mémorise l'adresse téléphonique du serveur-routeur.

Ainsi, en actionnant la commande "répondre" (cf. nota), l'utilisateur destinataire provoque l'émission du message-réponse qu'il a élaboré vers le serveur-routeur, lequel route le message-réponse vers le téléphone mobile de l'utilisateur émetteur en préservant l'anonymat de l'utilisateur émetteur et de l'utilisateur destinataire Nota : on rappelle que les téléphones mobiles comportent une commande "répondre" dont l'actionnement produit l'émission d'un message-réponse vers l'adresse téléphonique de l'émetteur du message d'origine.

Le serveur-routeur, selon l'invention, est plus particulièrement destiné à permettre à un utilisateur destinataire de répondre à plusieurs utilisateurs émetteurs qui lui ont adressé un ou plusieurs messages.

Le serveur-routeur est caractérisé en ce qu'il comporte plusieurs adresses téléphoniques de sortie, des moyens de calcul pour attribuer des adresses téléphoniques de sortie différentes pour chaque utilisateur émetteur et des moyens de mémorisation pour mémoriser les adresses téléphoniques des utilisateurs émetteurs des messages qu'il route, en attribuant une zone mémoire déterminée pour chaque adresse téléphonique de sortie.

Ainsi, en actionnant la commande "répondre", l'utilisateur destinataire provoque l'émission du message-réponse qu'il a élaboré vers l'adresse téléphonique du serveur-routeur associée à l'adresse téléphonique de l'utilisateur émetteur. Le serveur-routeur route ensuite le message-réponse vers l'utilisateur émetteur du message d'origine.

De préférence, les moyens de mémorisation du serveur-routeur mémorisent l'adresse téléphonique de l'utilisateur émetteur du dernier message qu'il route via une adresse téléphonique de sortie déterminée.

Ainsi, dans le cas où le nombre de messages adressés à un utilisateur destinataire est supérieur au nombre d'adresses téléphoniques de sortie du serveur-routeur, les utilisateurs émetteurs qui seront éliminés seront ceux qui, pour une adresse de sortie déterminée, ont l'antériorité la plus ancienne.

Dans une première variante de réalisation, le serveur-routeur est caractérisé en ce qu'il comporte des moyens pour effacer après une période de temps déterminée les adresses téléphoniques des utilisateurs émetteurs auquel l'utilisateur destinataire n'a pas répondu.

Ainsi, dans le cas où le nombre de messages adressés à un utilisateur destinataire est supérieur au nombre d'adresses téléphoniques de sortie du serveur-routeur, les utilisateurs émetteurs qui seront éliminés seront ceux dont l'antériorité excède une date prédéterminée.

Dans une deuxième variante de réalisation, le serveur-routeur est caractérisé en ce qu'il comporte des moyens pour effacer l'adresse téléphonique de l'utilisateur émetteur le plus ancien auquel l'utilisateur destinataire n'a pas répondu.

Ainsi, dans le cas où le nombre de messages adressés à un utilisateur, destinataire est supérieur au nombre d'adresses téléphoniques de sortie du serveur-routeur, les utilisateurs émetteurs-qui seront éliminés seront ceux qui ont l'antériorité la plus ancienne.

Dans une troisième variante de réalisation, le serveur-routeur est caractérisé en ce qu'il comporte des moyens pour effacer l'adresse téléphonique de l'utilisateur émetteur auquel l'utilisateur destinataire a répondu.

Ainsi, le serveur-routeur libère des adresses téléphoniques de sortie.

Le serveur-routeur, selon l'invention, est plus particulièrement destiné à permettre à un utilisateur destinataire membre d'un forum de recevoir des messages du forum et de répondre.

Le serveur-routeur est caractérise en ce qu'il comporte une adresse téléphonique de sortie commune pour tous les messages du forum.

Ainsi, tous les messages entrant ou sortant entre le forum et le membre concerné transitent par une adresse téléphonique unique et ont pour utilisateurs destinataires soit l'utilisateur destinataire (membre du forum), s'ils proviennent du serveur, soit le forum, s'ils proviennent de l'utilisateur destinataire).

De préférence, les adresses téléphoniques de sortie du serveur-routeur se présentent notamment sous la forme de canaux de multiplexage.

Le serveur-routeur est plus particulièrement conçu pour échanger dé manière anonyme des messages audio. Les téléphones mobiles comprennent des moyens d'émission pour émettre en mode DTMF le pseudo de l'utilisateur destinataire ou du groupe ou du forum et des moyens de transmission pour transmettre le pseudo en mode DTMF vers un serveur-routeur.

De préférence, pour émettre en mode DTMF le pseudo de l'utilisateur destinataire ou du groupe ou du forum, le serveur-routeur vocal est caractérisé en ce qu'il comporte des moyens de transmission pour envoyer au téléphone mobile de l'utilisateur émetteur une requête d'envoi du pseudo en mode DTMF. Le téléphone mobile comporte des moyens d'entrée de données, notamment un clavier.

Ainsi, l'utilisateur émetteur peut entrer, au moyen du clavier de son téléphone mobile, la première lettre du pseudo de l'utilisateur destinataire et ainsi de suite. Ainsi, par exemple, le pseudo "musik" sera entré par l'utilisateur émetteur en mode DTMF en utilisant successivement les touches portant les chiffres : 68745.

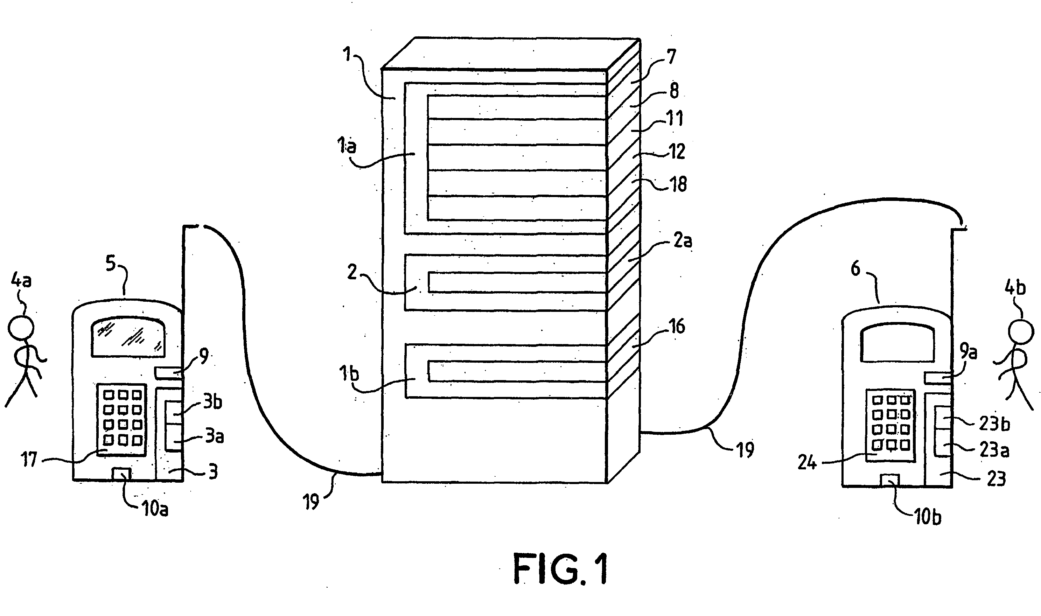

D'autres caractéristiques et avantages de l'invention apparaîtront à la lecture de la description des variantes de réalisation de l'invention, données à titre d'exemple indicatif et non limitatif et de la figure 1 qui représente de manière schématique le système selon l'invention.

On a représenté sur la figure 1, le système permettant à des utilisateurs 4a, 4b de téléphones mobiles 5, 6 d'échanger de manière anonyme, grâce à un serveur-dédié 1, des messages sous forme de texte ou sous forme audio, en employant des commandes simples ne nécessitant pas l'utilisation de mots-clés.

Le système, selon l'invention, comprend un serveur dédié 1 utilisant des pseudonymes (on emploiera par la suite le raccourci "pseudos"). Le serveur dédié 1 comporte un serveur-routeur-texte 1a, pour router les messages texte ainsi qu'un serveur-routeur-vocal 1b, pour router les messages audio. Le système, dont le fonctionnement repose sur l'utilisation de pseudos, rend possible l'échange de messages entre des utilisateurs n'utilisant pas le même protocole : SMS, Voix, WAP, Internet, mel et autres messageries instantanées. Un tel système permet ainsi d'établir des passerelles entre ces différents protocoles et de résoudre le problème de leur compatibilité.

### Enregistrement des pseudos dans le serveur-dédié

Les pseudos utilisés par les utilisateurs 4a, 4b sont par exemple des prénoms tels que Gilles, Jean, Christian ... Ils permettent aux utilisateurs 4a, 4b d'échanger des messages de manière anonyme. Qu'il s'agisse de l'envoi d'un message en mode texte ou en mode audio, le pseudo utilisé demeure le même.

Les utilisateurs 4a, 4b utilisent des téléphones mobiles 5, 6, qui comportent des moyens 3, 23 d'émission. Ces moyens d'émission 3, 23 comportent des moyens 3a, 23a d'insertion ainsi que des moyens 3b, 23b de transmission. Les téléphones mobiles 5, 6 des utilisateurs 4a, 4b comportent en outre des moyens 17, 24 d'entrée de données, notamment un clavier permettant aux utilisateurs 4a, 4b de saisir des données. Lorsqu'ils se connectent pour la première fois au serveur-dédié 1, via un réseau de téléphonie mobile 19, les utilisateurs 4a, 4b, transmettent leurs pseudos au serveur-dédié 1, grâce aux moyens 3b, 23b de transmission contenus dans leurs téléphones mobiles 5, 6. Le serveur-dédié 1 comprend des moyens 2a de mémorisation pour mémoriser, dans une base de données 2, les pseudos ainsi transmis désignant les utilisateurs 4a, 4b ainsi que les adresses téléphoniques des téléphones mobiles 5, 6, des utilisateurs 4a, 4b.

### Envoi d'un message texte par un utilisateur émetteur déterminé à un autre utilisateur destinataire déterminé

Pour envoyer à un utilisateur destinataire 4b un message texte, l'utilisateur émetteur 4a utilise les moyens 3 d'émission contenus dans son téléphone mobile 5. Les moyens 3 d'émission contenus dans le téléphone mobile 5 de l'utilisateur émetteur 4a comportent des moyens 3a d'insertion pour insérer le pseudo de l'utilisateur destinataire 4b dans un message-texte associé au message texte.

Par exemple, pour envoyer à l'utilisateur destinataire 4b (dont le pseudo est Gilles) le message "Le rendez-vous de lundi est maintenu", l'utilisateur émetteur 4a (dont le pseudo est Jean) saisit le message suivant "Gilles Le rendez-vous de lundi est maintenu", au moyen du clavier 17 de son téléphone mobile 5. Dans cet exemple, le message-texte associé est Gilles, autrement dit le pseudo de l'utilisateur destinataire 4b. l'utilisateur émetteur 4a utilise les moyens 3 d'émission contenus dans son téléphone mobile 5, plus particulièrement les moyens 3b de transmission pour transmettre le message texte ("Le rendez-vous de lundi est maintenu") au serveur-routeur 1 ainsi que le message-texte associé ("Gilles"). Le serveur-routeur-texte 1a comporte des moyens 18 de réception pour recevoir le message transmis par l'utilisateur émetteur 4a. Le serveur-routeur-texte la comporte en outre des moyens 7 de détection pour détecter dans le message la présence d'un message-texte contenant un pseudo (le pseudo Gilles) et pour rechercher dans la base de données 2 l'adresse téléphonique du téléphone mobile 6 de l'utilisateur destinataire 4b (l'adresse téléphonique de Gilles). Le serveur-routeur-texte 1a comporte en outre des moyens 8 de routage pour router le message-texte ainsi que le message texte vers le téléphone mobile 6 de l'utilisateur destinataire 4b (Gilles). Ainsi, l'utilisateur destinataire 4b (Gilles) reçoit le message texte émis par l'utilisateur émetteur 4a (Jean) , sans que celui-ci (Jean) ne divulgue son identité et/ou ne connaisse l'identité, de l'utilisateur destinataire, 4b (Gilles) et également sans que celui-ci (Jean) n'utilise des commandes textes pour effectuer l'envoi du message texte.

### Envoi d'un message audio par un utilisateur émetteur déterminé à un autre utilisateur destinataire déterminé

L'utilisateur émetteur 4a peut choisir d'envoyer, de manière anonyme, un message audio (par exemple sa voix enregistrée). Pour envoyer un message audio, l'utilisateur émetteur 4a doit joindre à ce message audio un message en mode DTMF contenant l'adresse de l'utilisateur destinataire 4b. Le message en mode DTMF contient le pseudo de l'utilisateur destinataire 4b. l'utilisateur émetteur 4a utilise les moyens d'émission 3 de son téléphone mobile 5 pour émettre en mode DTMF le pseudo de l'utilisateur destinataire 4b. Le téléphone mobile 5 de l'utilisateur émetteur 4a comprend en outre des moyens de transmission 3b pour transmettre le pseudo en mode DTMF vers le serveur-routeur-vocal 1b. Pour émettre le pseudo de l'utilisateur destinataire 4b en mode DTMF, le serveur-routeur-vocal 1b comporte des moyens 16 de transmission pour envoyer au téléphone mobile 5 de l'utilisateur émetteur 4a une requête d'envoi du pseudo en mode DTMF. Le téléphone mobile 5 de l'utilisateur émetteur 4a comporte des moyens 17 d'entrée de données, notamment un clavier. Ainsi, en pratique, l'utilisateur émetteur 4a saisit au moyen du clavier de son téléphone mobile 5 la première lettre du pseudo de l'utilisateur destinataire 4b et ainsi de suite. Par exemple, le pseudo "musik" sera entré par l'utilisateur émetteur 4a en mode DTMF en utilisant successivement les touches portant les chiffres : 68745. Lors de l'inscription du pseudo "musik", on aura pris garde de vérifier que cette combinaison n'est pas déjà utilisée car, par exemple, le mot "oupil" possède la même signature DTMF.

L'utilisateur émetteur 4a transmet le message audio et le message-texte DTMF associé à un serveur-routeur-vocal 1b. Le message est alors enregistré sur le serveur-routeur-vocal 1b en attente d'écoute.

L'utilisateur destinataire doit pour écouter ses messages appeler le serveur-routeur-vocal 1b qui lui "lira" les messages audio en ajoutant au préalable le nom de l'utilisateur émetteur et éventuellement la date et l'heure d'émission.

En appuyant sur une touche déterminée du téléphone mobile l'utilisateur destinataire peut alors répondre vocalement à l'utilisateur émetteur (pseudo ou groupe) .

Dans une variante de réalisation, le serveur-routeur-vocal 1b envoie un SMS d'alerte à l'utilisateur destinataire pour lui notifier qu'il a reçu un message audio.

Dans une autre variante de réalisation compatible avec la précédente, l'utilisateur destinataire, en consultant ses messages transitant via le web, prend connaissance dans la liste des messages reçus : du nom du pseudo de l'utilisateur émetteur, de la date et de l'heure de réception du message audio. Puis, en cliquant sur une icône représentant un fichier attaché il écoute le message-audio reçu. Il lui est ensuite possible de répondre à l'utilisateur émetteur en lui adressant un message-texte via le web.

### Reconnaissance des pseudos par le serveur-dédié

Il convient d'éviter que le serveur-dédié 1, lorsqu'il reçoit un message, confonde un pseudo avec un mot ayant les apparences d'un pseudo. Par exemple, le serveur-dédié 1 ne doit pas confondre le pseudo du destinataire Gilles avec celui de Philippe dans le message suivant que Jean adresse à Gilles : "Gilles Tu as rendez-vous avec Philippe lundi". Deux variantes sont possibles pour éviter toute confusion.

Selon une première variante de réalisation, le pseudo est défini par sa position dans le message, notamment la première. Ainsi, par exemple, le message : "Gilles Christian Vous avez rendez-vous avec Philippe lundi" sera interprété par le serveur dédié 1 comme contenant l'instruction d'envoyer le message aux adresses téléphoniques des pseudos Gilles et Christian mais de ne pas l'envoyer à Philippe qui est pourtant un pseudo figurant dans la base de données 2. En effet, seuls les pseudos Gilles et Christian sont situés au début du message. Le séparateur qui évite de confondre les pseudos Gilles et Christian n'est pas une virgule ou tout autre signe mais l'espace entre le caractère... s et le caractère ...C.

Selon une seconde variante de réalisation, le pseudo est composé en ajoutant à un mot une balise telle que notamment un astérisque*. Ainsi, par exemple, le message : "*Gilles. Tu as rendez-vous avec Philippe lundi" sera interprété par le serveur dédié 1 comme contenant l'instruction d'envoyer le message à l'adresse téléphonique du pseudo *Gilles. En effet, grâce à l'insertion de la balise dans le message, le serveur-dédié 1 détectera le pseudo *Gilles qu'il ne confondra pas avec le mot Philippe qui a les apparences du pseudo *Philippe.

### Envoi d'un message texte ou audio par un utilisateur émetteur aux membres d'un groupe d'utilisateurs

Les moyens 2a de mémorisation du serveur-routeur 1 permettent de mémoriser dans la base de données 2 du serveur-dédié 1 les identifiants et/ou le pseudo d'un groupe d'utilisateurs ainsi que les adresses du serveur hébergeant le groupe et/ou les adresses téléphoniques des téléphones mobiles des utilisateurs membres du groupe. Les adresses du serveur hébergeant le groupe sont par exemple les adresses des canaux de sortie. En pratique, l'utilisateur émetteur 4a, qui souhaite envoyer un message à un groupe d'utilisateurs, insère dans son message le pseudo du groupe. Dans ce cas, le message est routé directement ou indirectement par le serveur-dédié 1 vers les utilisateurs membres du groupe, dont le serveur-dédié 1 connaît les adresses téléphoniques.

### Envoi d'un message texte ou audio par un utilisateur émetteur aux membres d'un forum de discussion

L'utilisateur émetteur 4a, qui souhaite adresser un message à un forum de discussion, insère dans son message le pseudo du forum. Dans le cas où l'utilisateur émetteur 4a n' insère pas de pseudo dans son message, son message est réputé avoir été adressé aux participants du forum de discussion, dont l'utilisateur émetteur 4a fait partie. Le message est alors mémorisé par le serveur dédié 1 mais n'est pas envoyé automatiquement aux autres membres du forum. Les autres membres du forum peuvent néanmoins le consulter et l'obtenir en se connectant au serveur dédié 1.

### Réponse à un message reçu

Concernant la réponse à un message reçu, le problème qui se pose est le suivant : un utilisateur émetteur 4a (Jean) a adressé dé manière anonyme (en utilisant le procédé ci-dessus décrit) à un utilisateur destinataire 4b (Gilles) un message. L'utilisateur destinataire 4b (Gilles) souhaite répondre à l'utilisateur émetteur 4a (Jean) bien qu'il ne connaisse pas son adresse.

De manière connue en soi (cette fonction est actuellement incorporée par les fabricants de téléphones mobiles) le téléphone mobile 6 de l'utilisateur destinataire 4b (Gilles) comporte des moyens 10b de mémorisation pour mémoriser l'adresse de l'utilisateur émetteur 4a (Jean) d'un message. Le téléphone mobile 5 de l'utilisateur émetteur 4a comporte des moyens 10a similaires. Dans le cadre d'un système de messagerie conçu pour être anonyme et si l'on reprend l'exemple ci-dessus, le téléphone mobile 6 de l'utilisateur destinataire 4b (Gilles) mémorise l'adresse du serveur-dédié 1 puisque c'est le serveur-dédié 1 qui a routé de manière anonyme vers l'utilisateur destinataire 4b (Gilles) un message provenant d'un utilisateur émetteur 4a (Jean). Pour adresser à l'utilisateur émetteur 4a (Jean) un message réponse, l'utilisateur destinataire 4b (Gilles) dispose de moyens de réponse contenus dans son téléphone mobile 6. Plus particulièrement, le téléphone mobile 6 de l'utilisateur destinataire 4b (Gilles) comporte une commande 9a "répondre". Le téléphone mobile 5 de l'utilisateur émetteur 4a comporte une commande 9 similaire. En actionnant la commande 9a "répondre", l'utilisateur destinataire 4b (Gilles) provoque l'émission du message réponse qu'il a élaboré vers le serveur-dédié 1, lequel route ensuite le message-réponse vers le téléphone mobile 5 de l'utilisateur émetteur 4a (Jean) en préservant l'anonymat de l'utilisateur émetteur 4a (Jean) et de l'utilisateur destinataire 4b (Gilles). Afin de pouvoir router le message-réponse élaboré par l'utilisateur destinataire 4b (Gilles) vers l'utilisateur émetteur 4a (Jean), le serveur-dédié 1, grâce aux moyens de mémorisation 2a, mémorise l'adresse téléphonique du téléphone mobile 5 de l'utilisateur émetteur 4a (Jean) ainsi que l'adresse téléphonique du téléphone mobile 6 de l'utilisateur destinataire 4b (Gilles).

### Réponse à une pluralité de messages reçus

Un problème supplémentaire se pose dans le cas où plusieurs (et non plus un seul) utilisateurs émetteurs 4a (Jean, Christian) ont adressé de manière anonyme (en utilisant le procédé ci-dessus décrit) à un même utilisateur destinataire 4b (Gilles) différents messages-textes. En effet, il convient de retrouver l'adresse de chaque utilisateur émetteur 4a (Jean, Christian) des messages d'origine pour pouvoir ensuite router les messages réponse vers les bonnes adresses des utilisateurs émetteurs 4a (Jean, Christian). Pour résoudre ce problème et permettre à un utilisateur destinataire 4b (Gilles) de répondre à plusieurs utilisateurs émetteurs 4a (Jean, Christian) qui lui ont adressé un ou plusieurs messages, le serveur dédié 1 comporte plusieurs adresses téléphoniques de sortie. Les adresses téléphoniques de sortie du serveur-dédié 1 se présentent sous la forme de canaux de multiplexage. Le serveur dédié 1 comporte en outre des moyens de calcul 11 pour attribuer des adresses téléphoniques de sortie différentes pour chaque utilisateur émetteur 4a (Jean, Christian). Le serveur-dédié 1, grâce aux moyens de mémorisation 2a, mémorise les adresses téléphoniques des utilisateurs émetteurs 4a (Jean, Christian) des messages qu'il route, en attribuant une zone mémoire déterminée pour chaque adresse téléphonique de sortie. Ainsi, en actionnant la commande 9a "répondre". l'utilisateur destinataire 4b (Gilles) provoque l'émission du message-réponse, qu'il a élaboré vers l'adresse téléphonique du serveur dédié 1 associée à l'adresse téléphonique de l'utilisateur émetteur 4a (Jean ou Christian). Le serveur dédié 1 route ensuite le message-réponse vers l'utilisateur émetteur 4a (Jean ou Christian) du message d'origine. En pratique, les adresses téléphoniques de sortie sont attribuées de manière cyclique, par le serveur-dédié 1, aux différents messages reçus par un utilisateur destinataire 4b (Gilles) déterminé. Par exemple, un premier message reçu par Gilles provenant de Jean sera transmis par l'adresse téléphonique de sortie N°1, un deuxième message reçu par Gilles provenant de Christian sera transmis par l'adresse téléphonique de sortie N°2, et ainsi de suite. Le téléphone mobile 6 de l'utilisateur destinataire 4b (Gilles) propose alors à ce dernier de répondre aux messages reçus des utilisateurs émetteurs 4a (Jean et Christian). Par exemple, lorsque l'utilisateur destinataire 4b (Gilles), après avoir reçu et lu le message venant de l'utilisateur émetteur 4a (Christian), va appuyer sur la commande 9a "répondre" de son téléphone mobile 6, son téléphone mobile 6 va construire un message de réponse en insérant dans la trame du message l'adresse téléphonique de sortie (canal N° 2). Plus précisément, le numéro de l'adresse téléphonique de sortie sera inséré dans un champ "destinataire" de la trame du message. De même, l'adresse téléphonique de l'utilisateur destinataire 4b (Gilles) du message sera insérée dans un champ "émetteur" de la trame du message de réponse. Le téléphone mobile 6 de l'utilisateur destinataire 4b (Gilles) transmet au serveur-dédié 1 le message-réponse ainsi élaboré en utilisant l'adresse du canal d'émission (canal N°2) . Lorsqu'il reçoit le message-réponse (de Gilles), le serveur-routeur 1 détecte que le message-réponse vient de l'utilisateur destinataire 4b (Gilles). Il recherche dans la base de données 2 relative au canal N°2 le seul message qui a été adressé à l'utilisateur destinataire 4b (Gilles) par ce canal. Le serveur-routeur 1 détecte, dans ce seul et unique message, l'adresse de l'utilisateur émetteur 4a (Christian) de ce dernier message. Il retrouve ainsi l'adresse de l'utilisateur émetteur 4a (Christian).

Les moyens 2a du serveur-dédié 1 sont tels qu'ils mémorisent l'adresse téléphonique de l'utilisateur émetteur 4a du dernier message que le serveur-dédié 1 route via une adresse téléphonique de sortie déterminée. Par exemple, si le serveur-dédié 1 a transmis à Gilles deux messages par l'adresse téléphonique de sortie N°2, le premier venant d'Albert, le second venant de Christian, le serveur-dédié 1 mémorise uniquement le second et dernier message, c'est à dire celui venant de Christian. Ainsi, pour une même adresse de sortie, les messages qui sont éliminés sont ceux qui ont l'antériorité la plus ancienne. Dans l'exemple choisi ci-dessus, si Gilles veut répondre à Albert, le serveur dédié 1 ne saura pas retrouver l'adresse téléphonique de celui-ci. En effet, il aura effacé de la mémoire de la base de données 2, affectée au canal N°2, les données relatives à Albert (message le plus ancien) pour ne conserver que les données relatives à Christian (message le plus récent). Le nombre de messages auxquels un utilisateur destinataire 4b peut répondre est donc limité au nombre d'adresses téléphoniques de sortie du serveur-dédié 1. Afin de ne pas subir cette limitation, la solution consiste à "recycler" les adresses téléphoniques de sortie du serveur-dédié 1. Cette solution comporte plusieurs variantes.

Dans une première variante, le serveur-dédié 1 comporte des moyens 12 pour effacer, après une période de temps déterminée, les adresses téléphoniques, des utilisateurs émetteurs 4a auxquels l'utilisateur destinataire 4b n'a pas répondu. Ainsi, dans le cas où le nombre de messages adressés à un utilisateur destinataire 4b est supérieur au nombre d'adresses téléphoniques de sortie du serveur-dédié 1, les utilisateurs émetteurs qui sont éliminés sont ceux dont l'antériorité excède une date prédéterminée. Les adresses téléphoniques de sortie sont automatiquement libérées après une période de temps déterminée et peuvent à nouveau être utilisées par le serveur-dédié 1 pour router un message d'une autre provenance vers le même utilisateur destinataire 4b. Selon une variante améliorée de cette première variante, si une adresse téléphonique de sortie a été utilisée par l'utilisateur destinataire 4b pour répondre à un utilisateur émetteur 4a, alors la période de temps ci-dessus définie sera décomptée à partir de la date de réception par le serveur dédié 1 du message de réponse de l'utilisateur destinataire 4b.

Dans une deuxième variante, les moyens 12 du serveur-dédié 1 effacent l'adresse téléphonique de l'utilisateur émetteur 4a le plus ancien auquel l'utilisateur destinataire 4b n'a pas répondu. Ainsi, dans le cas où le nombre de messages adressés à un utilisateur destinataire 4b est supérieur au nombre d'adresses téléphoniques de sortie du serveur-dédié 1, les utilisateurs émetteurs 4a qui seront éliminés seront ceux qui ont l'antériorité la plus ancienne. Lorsque, pour un utilisateur destinataire 4b considéré, l'ensemble des adresses téléphoniques de sortie du serveur-dédié 1 est utilisé, le serveur-dédié 1 utilise l'adresse téléphonique de sortie du message mémorisé le plus ancien pour transmettre un nouveau message vers l'utilisateur destinataire 4b considéré et remplace dans la mémoire affectée à cette adresse téléphonique de sortie, le message le plus ancien par le nouveau message. Selon une variante améliorée de cette deuxième variante, si une adresse de sortie a été utilisée par un utilisateur destinataire 4b pour répondre à un utilisateur émetteur 4a, alors la date de réception du message émis par l'utilisateur émetteur 4a sera réputée être celle du message de réponse de l'utilisateur destinataire 4b.

Dans une troisième variante, les moyens 12 du serveur-dédié 1 effacent l'adresse téléphonique de l'utilisateur émetteur 4a auquel l'utilisateur destinataire 4b a répondu. Ainsi, le serveur-dédié 1 libère des adresses téléphoniques de sortie que l'utilisateur destinataire 4b peut alors utiliser pour envoyer un message de réponse à l'utilisateur émetteur 4a.

### Réponse à un message dans le cadre d'un forum de discussion

Dans le cas où l'utilisateur destinataire 4b est membre d'un forum et souhaite recevoir et répondre à des messages provenant du forum, le serveur-dédié 1 comporte une adresse téléphonique de sortie commune pour tous les messages du forum. Le serveur-dédié 1 joue alors le rôle d"utilisateur, émetteur. En effet, tous les messages entrant ou sortant entre le serveur dédié 1 et le membre du forum concerné transitent par une adresse téléphonique de sortie unique et ont pour utilisateurs destinataires : soit l'utilisateur destinataire 4b (membre du forum) s'ils proviennent du serveur-dédié 1, soit le serveur-dédié 1; s'ils proviennent de l'utilisateur destinataire 4b. L'utilisation d'une adresse téléphonique de sortie unique permet de libérer d'autres adresses téléphoniques de sortie du serveur-dédié 1 qui peuvent alors être affectées à la transmission d'autres messages, notamment à la transmission de messages entre utilisateurs ne participant pas à un forum de discussion.

## Revendications

1. Procédé permettant aux utilisateurs (4a, 4b) de téléphones mobiles (5, 6) d'échanger de manière anonyme des messages en employant des commandes simples ne nécessitant pas l'utilisation de mots-clés ;
ledit procédé comportant les étapes suivantes :
- l'étape I d'envoyer à un utilisateur destinataire (4b) un message texte ou audio élaboré par un utilisateur émetteur (4a),
- l'étape II de répondre à l'utilisateur émetteur (4a) en lui adressant un message-réponse élaboré par l'utilisateur destinataire (4b) ;
l'étape I d'envoyer à un utilisateur destinataire (4b) un message élaboré par un utilisateur émetteur (4a) comportant les étapes suivantes :
- l'étape de mémoriser dans une base de données (2) d'un serveur-routeur (1) des pseudos désignant les utilisateurs (4a, 4b) ainsi que les adresses téléphoniques des téléphones mobiles (5, 6) desdits utilisateurs (4a, 4b),
- l'étape d'insérer, au moyen du téléphone mobile (5) de l'utilisateur émetteur (4a), le pseudo de l'utilisateur destinataire (4b) dans un message-texte associé audit message,
- l'étape de transmettre, au moyen dudit téléphone mobile (5) de l'utilisateur émetteur (4a), ledit message-texte audit serveur-routeur (1) ainsi que le message,
- l'étape, pour ledit serveur-routeur (1), de détecter dans ledit message-texte la présence d'un pseudo et de rechercher dans ladite base de données (2) l'adresse téléphonique du téléphone mobile (6) de l'utilisateur destinataire (4b),
- l'étape, pour ledit serveur-routeur (1), de router ledit message vers ledit téléphone mobile (6) de l'utilisateur destinataire (4b).

2. Procédé selon la revendication 1 tel que l'étape de mémoriser dans une base de données (2) d'un serveur-routeur (1) des pseudos désignant les utilisateurs (4a, 4b) ainsi que les adresses téléphoniques des téléphones mobiles (5, 6) desdits utilisateurs (4a, 4b) comprend :
- l'étape pour l'utilisateur (4a ou 4b) concerné de transmettre son pseudo au serveur-routeur (1) notamment lors de l'établissement de la première interconnexion.

3. Procédé selon l'une quelconque des revendications 1 ou 2 tel que le pseudo est composé en ajoutant à un mot une balise telle que notamment un astérisque*.

4. Procédé selon l'une quelconque des revendications 1 ou 2 tel que le pseudo est défini par sa position dans le message, notamment la première.

5. Procédé selon l'une quelconque des revendications 1 à 4 tel que l'étape de mémoriser dans une base de données (2) d'un serveur-routeur (1) des pseudos désignant les utilisateurs (4a, 4b) ainsi que les adresses téléphoniques des téléphones mobiles (5, 6) desdits utilisateurs (4a, 4b) comprend :
- l'étape de mémoriser les identifiants et/ou le pseudo d'un groupe ainsi que les adresses du serveur hébergeant le groupe et/ou les adresses téléphoniques des téléphones mobiles des utilisateurs membres du groupe.

6. Procédé selon l'une quelconque des revendications 1 à 5 ; lesdits téléphones mobiles (5, 6) comportant une commande (9, 9a) "répondre" dont l'actionnement produit l'émission d'un message-réponse vers l'adresse téléphonique de l'émetteur du message d'origine ;
dans lequel l'étape II de répondre à l'utilisateur émetteur (4a) en lui adressant un message-réponse élaboré par l'utilisateur destinataire (4b) comprend les étapes suivantes :
- l'étape de mémoriser dans le serveur-routeur (1) l'adresse téléphonique du téléphone mobile (5) de l'utilisateur émetteur (4a) ainsi que l'adresse téléphonique du téléphone mobile (6) de l'utilisateur destinataire (4b),
- l'étape de mémoriser dans le téléphone mobile (6) de l'utilisateur destinataire (4b) l'adresse téléphonique du serveur-routeur (1) .

7. Procédé selon la revendication 6 plus particulièrement destiné à permettre à un utilisateur destinataire (4b) de répondre à plusieurs utilisateurs émetteurs qui lui ont adressé un ou plusieurs messages ; dans lequel
- pour transmettre à l'utilisateur destinataire (4b) les messages provenant des différents utilisateurs émetteurs, le serveur-routeur (1) utilise des adresses téléphoniques de sortie différentes pour chaque utilisateur émetteur (4a),
- le serveur-routeur (1) mémorise les adresses téléphoniques des utilisateurs émetteurs des messages qu'il route, en attribuant une zone mémoire déterminée pour chaque adresse téléphonique de sortie.

8. Procédé selon la revendication 7 dans lequel le serveur-routeur (1) mémorise l'adresse téléphonique de l'utilisateur émetteur (4a) du dernier message qu'il route via une adresse téléphonique de sortie déterminée.

9. Procédé selon l'une quelconque des revendications 7 ou 8, dans lequel le serveur-routeur (1) efface après une période de temps déterminée les adresses téléphoniques des utilisateurs émetteurs auquel l'utilisateur destinataire (4b) n'a pas répondu.

10. Procédé selon l'une quelconque des revendications 7 à 9, dans lequel le serveur-routeur (1) efface l'adresse téléphonique de l'utilisateur émetteur le plus ancien auquel l'utilisateur destinataire (4b) n'a pas répondu.

11. Procédé selon l'une quelconque des revendications 7 à 10, dans lequel le serveur-routeur (1) efface l'adresse téléphonique de l'utilisateur émetteur auquel l'utilisateur destinataire (4b) a répondu.

12. Procédé selon la revendication 6 plus particulièrement destiné à permettre à un utilisateur destinataire (4b) membre d'un forum de recevoir des messages du forum et de répondre ;
dans lequel
- pour transmettre à l'utilisateur destinataire (4b) les messages provenant du forum le serveur-routeur (1) utilise une adresse téléphonique de sortie commune pour tous les messages du forum.

13. Procédé selon l'une quelconque des revendications 6 à 12 tel que les adresses téléphoniques de sortie du serveur-routeur (1) se présentent notamment sous la forme de canaux de multiplexage.

14. Procédé selon l'une quelconque des revendications 1 à 13, tel que pour échanger de manière anonyme des messages audio, ledit procédé comprend l'étape suivante :
- l'étape d'émettre en mode DTMF le pseudo de l'utilisateur destinataire (4b) ou du groupe ou du forum,
- l'étape de transmettre le pseudo en mode DTMF vers un serveur-routeur-vocal (1b).

15. Procédé selon la revendication 14 tel que pour émettre en mode DTMF le pseudo de l'utilisateur destinataire (4b) ou du groupe ou du forum, ledit procédé comprend les étapes suivantes :
- l'étape d'envoyer au téléphone mobile (5) de l'utilisateur émetteur (4a), à partir du serveur-routeur-vocal (1b), une requête d'envoi du pseudo en mode DTMF,
- l'étape d'entrer au moyen du clavier (17) du téléphone mobile de l'utilisateur émetteur (4a) la première lettre du pseudo de l'utilisateur destinataire (4b) et ainsi de suite.

16. Système permettant aux utilisateurs (4a, 4b) de téléphones mobiles (5, 6) d'échanger de manière anonyme des messages en employant des commandes simples ne nécessitant pas l'utilisation de mots-clés ;
ledit système comprenant :
- des moyens (2a) de mémorisation pour mémoriser dans une base de données (2) d'un serveur-routeur (1) des pseudos désignant les utilisateurs (4a, 4b) ainsi que les adresses téléphoniques des téléphones mobiles (5, 6) desdits utilisateurs (4a, 4b),
- des moyens (3, 23) d'émission pour envoyer à un utilisateur destinataire (4b) un message élaboré par un utilisateur émetteur (4a),
- des moyens (9, 9a) de réponse pour adresser à l'utilisateur émetteur (4a) un message-réponse élaboré par l'utilisateur destinataire (4b);
lesdits moyens (3) d'émission pour envoyer à un utilisateur destinataire (4b) un message élaboré par un utilisateur émetteur (4a) comportant
- des moyens (3a, 23a) d'insertion pour insérer le pseudo de l'utilisateur destinataire (4b) dans un message-texte associé audit message ;
- des moyens (3b, 23b) de transmission pour transmettre ledit message-texte audit serveur-routeur (1) ainsi que le message,
ledit serveur-routeur (1) comportant :
- des moyens 7 de détection pour détecter dans ledit message-texte la présence d'un pseudo et de rechercher dans ladite base de données (2) l'adresse téléphonique du téléphone mobile (6) de l'utilisateur destinataire (4b),
- des moyens (8) de routage pour router ledit message vers ledit téléphone mobile (6) de l'utilisateur destinataire (4b).

17. Système selon la revendication 16 tel que pour mémoriser dans une base de données (2) d'un serveur-routeur (1) des pseudos désignant les utilisateurs (4a, 4b) ainsi que les adresses téléphoniques des téléphones mobiles (5, 6) desdits utilisateurs (4a, 4b),
- le téléphone mobile de l'utilisateur (4a, 4b) concerné comporte des moyens (3b, 23b) de transmission pour transmettre son pseudo au serveur-routeur (1) notamment lors de l'établissement de la première interconnexion.

18. Système selon l'une quelconque des revendications 16 ou 17, tel que le pseudo est composé en ajoutant à un mot une balise telle que notamment un astérisque*.

19. Système selon l'une quelconque des revendications 16 ou 17, tel que le pseudo est défini par sa position dans le message, notamment la première.

20. Système selon l'une quelconque des revendications 16 à 19 tel que
- lesdits moyens (2a) de mémorisation mémorisent les identifiants et/ou le pseudo d'un groupe ainsi que les adresses du serveur hébergeant le groupe et/ou les adresses téléphoniques des téléphones mobiles des utilisateurs membres du groupe.

21. Système selon l'une quelconque des revendications 16 à 20 ; lesdits téléphones mobiles (5, 6) comportant une commande (9, 9a) "répondre" dont l'actionnement produit l'émission d'un message-réponse vers l'adresse téléphonique de l'émetteur du message d'origine ;
pour transmettre à l'utilisateur émetteur (4a) ledit message-réponse élaboré par l'utilisateur destinataire (4b) ledit système comprenant :
- des moyens (2a) de mémorisation-serveur-routeur (1) pour mémoriser dans le serveur-routeur (1) l'adresse téléphonique du téléphone mobile (5) de l'utilisateur émetteur (4a) ainsi que l'adresse téléphonique du téléphone mobile (6) de l'utilisateur destinataire (4b),
- des moyens (10a, 10b) de mémorisation-téléphone-mobile pour mémoriser dans le téléphone mobile (6) de l'utilisateur destinataire (4b) l'adresse téléphonique du serveur-routeur (1).

22. Système selon la revendication 21 plus particulièrement destiné à permettre à un utilisateur destinataire (4b) de répondre à plusieurs utilisateurs émetteurs qui lui ont adressé un ou plusieurs messages ;
ledit système étant tel que le serveur-routeur (1) comporte :
- plusieurs adresses téléphoniques de sortie, et
- des moyens (11) de calcul pour attribuer des adresses téléphoniques de sortie différentes pour chaque utilisateur émetteur (4a), et
- des moyens (2a) de mémorisation pour mémoriser les adresses téléphoniques des utilisateurs émetteurs des messages qu'il route, en attribuant une zone mémoire déterminée pour chaque adresse téléphonique de sortie.

23. Système selon la revendication 22 tel que les moyens (2a) de mémorisation-serveur-routeur (1) mémorisent l'adresse téléphonique de l'utilisateur émetteur (4a) du dernier message qu'il route via une adresse téléphonique de sortie déterminée.

24. Système selon l'une quelconque des revendications 22 ou 23, dans lequel le serveur-routeur (1) comporte des moyens (12) pour effacer après une période de temps déterminée les adresses téléphoniques des utilisateurs émetteurs auquel l'utilisateur destinataire (4b) n'a pas répondu.

25. Système selon l'une quelconque des revendications 22 à 24, dans lequel le serveur-routeur (1) comporte des moyens (12) pour effacer l'adresse téléphonique de l'utilisateur émetteur (4a) le plus ancien auquel l'utilisateur destinataire (4b) n'a pas répondu.

26. Système selon l'une quelconque des revendications 22 à 25, dans lequel le serveur-routeur (1) comporte des moyens (12) pour effacer l'adresse téléphonique de l'utilisateur émetteur (4a) auquel l'utilisateur destinataire (4b) a répondu.

27. Système selon la revendication 21 plus particulièrement destiné à permettre à un utilisateur destinataire (4b) membre d'un forum de recevoir des messages du forum et de répondre ;
dans lequel le serveur-routeur (1) comporte une adresse téléphonique de sortie commune pour tous les messages du forum.

28. Système selon l'une quelconque des revendications 21 à 27, tel que les adresses téléphoniques de sortie du serveur-routeur (1) se présentent notamment sous la forme de canaux de multiplexage.

29. Système selon l'une quelconque des revendications 16 à 28, tel que pour échanger de manière anonyme des messages audio lesdits téléphones mobiles dudit système comprennent :
- des moyens (3, 23) d'émission pour émettre en mode DTMF le pseudo de l'utilisateur destinataire (4b) ou du groupe ou du forum,
- des moyens (3b, 23b) de transmission pour transmettre le pseudo en mode DTMF vers un serveur-routeur-vocal (1b).

30. Système selon la revendication 29, tel que pour émettre en mode DTMF le pseudo de l'utilisateur destinataire (4b) ou du groupe ou du forum,
- ledit serveur-routeur-vocal (1b) comporte des moyens (16) de transmission pour envoyer au téléphone mobile (5) de l'utilisateur émetteur (4a) une requête d'envoi du pseudo en mode DTMF,
- ledit téléphone mobile (5) comporte des moyens (17) d'entrée de données, notamment un clavier,

31. Serveur-routeur (1) permettant aux utilisateurs (4a, 4b) de téléphones mobiles (5, 6) d'échanger de manière anonyme des messages en employant des commandes simples ne nécessitant pas l'utilisation de mots-clés ;
ledit serveur-routeur (1) comprenant :
- des moyens (2a) de mémorisation pour mémoriser dans une base de données (2) des pseudos désignant les utilisateurs (4a, 4b) ainsi que les adresses téléphoniques des téléphones mobiles (5, 6) desdits utilisateurs (4a, 4b) ;
ledit utilisateur émetteur (4a) envoyant à un utilisateur destinataire (4b) un message-texte comprenant le pseudo de l'utilisateur destinataire (4b) ;
ledit utilisateur destinataire (4b) adressant à l'utilisateur émetteur (4a) un message-réponse ;
ledit serveur-routeur (1) comportant en outre :
- des moyens (18) de réception pour recevoir ledit message-texte ainsi que le message,
- des moyens (7) de détection pour détecter dans ledit message-texte la présence d'un pseudo et de rechercher dans ladite base de données (2) l'adresse téléphonique du téléphone mobile (6) de l'utilisateur destinataire (4b),
- des moyens (8) de routage pour router ledit message vers ledit téléphone mobile (6) de l'utilisateur destinataire (4b).

32. Serveur-routeur (1) selon la revendication 31, tel que pour mémoriser dans une base de données (2) du serveur-routeur (1) des pseudos désignant les utilisateurs ainsi que les adresses téléphoniques des téléphones mobiles (5, 6) desdits utilisateurs (4a, 4b), les téléphones mobiles (5, 6) des utilisateurs (4a, 4b) concernés transmettent leur pseudo au serveur-routeur (1) notamment lors de l'établissement de la première interconnexion.

33. Serveur-routeur (1) selon l'une quelconque des revendications 31 ou 32, tel que le pseudo est composé en ajoutant à un mot une balise telle que notamment un astérisque*.

34. Serveur-routeur (1) selon l'une quelconque des revendications 31 ou 32, tel que le pseudo est défini par sa position dans le message, notamment la première.

35. Serveur-routeur (1) selon l'une quelconque des revendications 31 à 34, tel que
- lesdits moyens (2a) de mémorisation mémorisent les identifiants et/ou le pseudo d'un groupe ainsi que les adresses du serveur hébergeant le groupe et/ou les adresses téléphoniques des téléphones mobiles des utilisateurs membres du groupe.

36. Serveur-routeur (1) selon l'une quelconque des revendications 31 à 35; lesdits téléphones mobiles (5, 6) comportant une commande "répondre" dont l'actionnement produit l'émission d'un message-réponse vers l'adresse téléphonique de l'émetteur du message d'origine ;
ledit serveur-routeur (1) comportant des moyens (2a) de mémorisation pour mémoriser l'adresse téléphonique du téléphone mobile (5) de l'utilisateur émetteur (4a) ainsi que l'adresse téléphonique du téléphone mobile (6) de l'utilisateur destinataire (4b) ;
le téléphone mobile (6) de l'utilisateur destinataire (4b) mémorisant l'adresse téléphonique du serveur-routeur (1).

37. Serveur-routeur (1) selon la revendication 36 plus particulièrement destiné à permettre à un utilisateur destinataire (4b) de répondre à plusieurs utilisateurs émetteurs qui lui ont adressé un ou plusieurs messages ;
le serveur-routeur (1) comportant :
- plusieurs adresses téléphoniques de sortie, et
- des moyens (11) de calcul pour attribuer des adresses téléphoniques de sortie différentes pour chaque utilisateur émetteur (4a), et
- des moyens (2a) de mémorisation pour mémoriser les adresses téléphoniques des utilisateurs émetteurs des messages qu'il route, en attribuant une zone mémoire déterminée pour chaque adresse téléphonique de sortie.

38. Serveur-routeur (1) selon la revendication 37 tel que les moyens (2a) de mémorisation du serveur-routeur (1) mémorisent l'adresse téléphonique de l'utilisateur émetteur (4a) du dernier message qu'il route via une adresse téléphonique de sortie déterminée.

39. Serveur-routeur (1) selon l'une quelconque des revendications 37 ou 38, comportant des moyens (12) pour effacer après une période de temps déterminée les adresses téléphoniques des utilisateurs émetteurs auquel l'utilisateur destinataire (4b) n'a pas répondu.

40. Serveur-routeur (1) selon l'une quelconque des revendications 37 à 39, comportant des moyens (12) pour effacer l'adresse téléphonique de l'utilisateur émetteur (4a) le plus ancien auquel l'utilisateur destinataire (4b) n'a pas répondu.

41. Serveur-routeur (1) selon l'une quelconque des revendications 37 à 40, comportant des moyens (12) pour effacer l'adresse téléphonique de l'utilisateur émetteur (4a) auquel l'utilisateur destinataire (4b) a répondu.

42. Serveur-routeur (1) selon la revendication 36 plus particulièrement destiné à permettre à un utilisateur destinataire (4b) membre d'un forum de recevoir des messages du forum et de répondre ;
le serveur-routeur (1) comportant une adresse téléphonique de sortie commune pour tous les messages du forum.

43. Serveur-routeur (1) selon l'une quelconque des revendications 36 à 42 tel que les adresses téléphoniques de sortie du serveur-routeur (1) se présentent notamment sous la forme de canaux de multiplexage.

44. Serveur-routeur (1) selon l'une quelconque des revendications 31 à 43 plus particulièrement conçu pour échanger de manière anonyme des messages audio ; lesdits téléphones mobiles comprenant des moyens (3, 23) d'émission pour émettre en mode DTMF le pseudo de l'utilisateur destinataire (4b) ou du groupe ou du forum et des moyens (3b, 23b) de transmission pour transmettre le pseudo en mode DTMF vers un serveur-routeur (1).

45. Serveur-routeur (1) selon la revendication 44 tel que pour émettre en mode DTMF le pseudo de l'utilisateur destinataire (4b) ou du groupe ou du forum ;
ledit serveur-routeur (1) comportant des moyens (16) de transmission pour envoyer au téléphone mobile (5) de l'utilisateur émetteur (4a) une requête d'envoi du pseudo en mode DTMF ;
ledit téléphone mobile (5) comportant des moyens (17) d'entrée de données, notamment un clavier.

## Patentansprüche

1. Verfahren zur Durchführung eines anonymen Nachrichtenaustausches für Benutzer (4a, 4b) von Mobiltelefonen (5, 6) unter Verwendung einfacher Steuerungen ohne Notwenigkeit einer Benutzung von Schlüsselwörtern, mit folgenden Verfahrensschritten:
- Verfahrensschritt I: Versenden einer von einem sendenden Benutzer (Absender 4a) erstellten Text- oder Audionachricht an einen empfangenden Benutzer (Empfänger 4b);
- Verfahrensschritt II: Antworten an den Absender (4a), indem diesem eine vom Empfänger (4b) erstellte Antwortnachricht gesendet wird;
wobei der Verfahrensschritt I - Versenden einer von einem Absender (4a) erstellten Nachricht an einen Empfänger (4b) - folgende Schritte umfasst:
- Speichern der die Benutzer (4a, 4b) bezeichnenden Alias-Namen sowie der vollständigen Rufnummern der Mobiltelefone (5, 6) der betreffenden Benutzer (4a, 4b) in einer Datenbank (2) eines Routenservers (1),
- Einfügens des Alias-Namens des Empfängers (4b) in einen zu der gesendeten Nachricht gehörenden Nachrichtentext mit Hilfe des Mobiltelefons (5) des Absenders (4a),
- Übertragung des genannten Nachrichtentextes sowie der Nachricht an den Routerserver (1) mit Hilfe des Mobiltelefons (5) des Absenders (4a),
- Erkennen des Vorliegens eines Alias-Namens in dem genannten Nachrichtentext und Suchen der vollständigen Rufnummer des Mobiltelefons (6) des Empfängers (4b) in der Datenbank (2) durch den Routenserver (1), und
- Routen der gesendeten Nachricht an das Mobiltelefon (6) des Empfängers (4b) durch den Routenserver (1).

2. Verfahren nach Anspruch 1, **dadurch gekennzeichnet, dass** zum Speichern der die Benutzer (4a, 4b) bezeichnenden Alias-Namen sowie der vollständigen Rufnummern der Mobiltelefone (5, 6) der betreffenden Benutzer (4a, 4b) in einer Datenbank (2) des Routenservers (1) der betreffende Benutzer (4a oder 4b) seinen Alias-Namen an den Routenserver (1), insbesondere beim Aufbau der ersten Zusammenschaltung, weitergibt

3. Verfahren nach einem der Ansprüche 1 oder 2, **dadurch gekennzeichnet, dass** der Alias-Name durch Hinzufügen eines Identifizierungskennzeichens, insbesondere eines Sterns *, zu einem Wort gebildet wird.

4. Verfahren nach einem der Ansprüche 1 oder 2, **dadurch gekennzeichnet, dass** der Alias-Name durch seine Position in der Nachricht, insbesondere die erste Position, definiert wird.

5. Verfahren nach einem der Ansprüche 1 bis 4, **dadurch gekennzeichnet, dass** zum Speichern der die Benutzer (4a, 4b) bezeichnenden Alias-Namen sowie der vollständigen Rufnummern der Mobiltelefone (5, 6) der betreffenden Benutzer (4a, 4b) in einer Datenbank (2) des Routenservers (1) folgende Schritt durchgeführt wird:
- Speichern der Benutzeridentifikationen und/oder des Alias-Namens einer Gruppe sowie der Adressen des Servers, auf dem sich die Gruppe und/oder die vollständigen Rufnummern der Mobiltelefone der Benutzer befinden, die Mitglieder der Gruppe sind.

6. Verfahren nach einem der Ansprüche 1 bis 5, wobei die Mobiltelefone (5, 6) eine Steuerung (9, 9a) "Antworten" umfassen, durch deren Betätigung das Senden einer Antwortnachricht an die vollständige Rufnummer des Absenders der ursprünglichen Nachricht bewirkt wird,
bei dem der Verfahrensschritt II - Antworten an den Absender (4a) durch Aussenden einer vom Empfänger (4b) erstellten Antwortnachricht an den Absender der ursprünglichen Nachricht - folgende Schritte umfasst:
- Speichern der vollständigen Rufnummer des Mobiltelefons (5) des Absenders (4a) sowie der vollständigen Rufnummer des Mobiltelefons (6) des Empfängers (4b) in dem Routenserver (1), und
- Speichern der vollständigen Rufnummer des Routenservers (1) im Mobiltelefon (6) des Empfängers (4b).

7. Verfahren nach Anspruch 6, bei dem einem Empfänger (4b) ermöglicht wird, mehreren Absendern, die ihm eine oder mehrere Nachrichten gesendet haben, zu antworten, wobei
- der Routenserver (1) für jeden Absender (4a) verschiedene Abgangsrufnummern verwendet, um die von verschiedenen Absendern stammenden Nachrichten an den Empfänger (4b) weiterzuleiten,
- der Routenserver (1) die vollständigen Rufnummern der Absender der von ihm gerouteten Nachrichten speichert und dabei jeder Abgangsrufnummer einen bestimmten Speicherbereich zuordnet.

8. Verfahren nach Anspruch 7, wobei der Routenserver (1) die vollständige Rufnummer des Absenders (4a) der letzten Nachricht, die er über eine bestimmte Abgangsrufnummer routet, speichert.

9. Verfahren nach einem der Ansprüche 7 oder 8, wobei der Routenserver (1) nach Ablauf eines bestimmten Zeitraums die vollständigen Rufnummern der Absender, denen der Empfänger (4b) nicht geantwortet hat, löscht.

10. Verfahren nach einem der Ansprüche 7 bis 9, wobei der Routenserver (1) die vollständige Rufnummer des ältesten Absenders, dem der Empfänger (4b) nicht geantwortet hat, löscht.

11. Verfahren nach einem der Ansprüche 7 bis 10, wobei der Routenserver (1) die vollständige Rufnummer des Absenders, dem der Empfänger (4b) geantwortet hat, löscht.

12. Verfahren nach Anspruch 6, bei dem insbesondere einem Empfänger (4b), der Mitglied eines Forums ist, ermöglicht wird, Nachrichten von diesem Forum zu empfangen und auf diese zu antworten, wobei der Routenserver (1) eine gemeinsame Abgangsrufnummer für alle Nachrichten des Forums verwendet, um die aus dem Forum stammenden Nachrichten an den Empfänger (4b) weiterzuleiten.

13. Verfahren nach einem der Ansprüche 6 bis 12, **dadurch gekennzeichnet, dass** die Abgangsrufnummern des Routenservers (1) insbesondere in Form von Multiplexkanälen vorliegen.

14. Verfahren nach einem der Ansprüche 1 bis 13, **dadurch gekennzeichnet, dass** für den anonymen Austausch von Audionachrichten folgende Schritte vorgesehen sind:
- Versenden des Alias-Namens des Empfängers (4b) oder der Gruppe oder des Forums im DTMF-Modus, und
- Übertragen des Alias-Namens im DTMF-Modus an einen Sprach-Routenserver (1b).

15. Verfahren nach Anspruch 14, **dadurch gekennzeichnet, dass** zum Versenden des Alias-Namens des Empfängers (4b) oder der Gruppe oder des Forums im DTMF-Modus folgende Schritte vorgesehen sind:
- Senden einer Sendeabfrage des Alias-Namens im DTMF-Modus von einem Sprach-Routenserver (1b) an das Mobiltelefon (5) des Absenders (4a),
- Eingabe des ersten und der folgenden Buchstaben des Alias-Namens des Empfängers (4b) mit Hilfe der Tastatur (17) des Mobiltelefons des Absenders (4a).

16. System zur Durchführung eines anonymen Nachrichtenaustausches für Benutzer (4a, 4b) von Mobiltelefonen (5, 6) unter Verwendung einfacher Steuerungen ohne Notwenigkeit einer Benutzung von Schlüsselwörtern, mit folgenden Merkmalen:
- Speichermittel (2a) zur Speicherung der die Benutzer (4a, 4b) bezeichnenden Alias-Namen sowie der vollständigen Rufnummern der Mobiltelefone (5, 6) der betreffenden Benutzer (4a, 4b) in einer Datenbank (2) eines Routenservers (1),
- Sendemittel (3, 23) zum Senden einer von einem sendenden Benutzer (Absender 4a) erstellten Nachricht an einen empfangenden Benutzer (Empfänger 4b),
- Antwortmittel (9, 9a), um eine vom Empfänger (4b) erstellte Antwortnachricht an den Absender (4a) zu richten;
wobei die Sendemittel (3, 23) zum Senden einer von einem sendenden Benutzer (Absender 4a) erstellten Nachricht an einen empfangenden Benutzer (Empfänger 4b) folgende Merkmale umfassen:
- Einfügemittel (3a, 23a) zum Einfügen des Alias-Namens des Empfängers (4b) in einen zur genannten Nachricht gehörenden Nachrichtentext,
- Übertragungsmittel (3b, 23b) zur Übertragung des genannten Nachrichttextes sowie der Nachricht an den Routenserver (1),
wobei der Routenserver (1) folgende Merkmale umfasst:
- Erkennungsmittel (7), um in dem Nachrichtentext das Vorliegen eines Alias-Namens zu erkennen und in der Datenbank (2) die vollständige Rufnummer des Mobiltelefons (6) des Empfängers (4b) zu suchen, und
- Routingmittel (8), um die genannte Nachricht an das Mobiltelefon (6) des Empfängers (4b) zu routen.

17. System nach Anspruch 16, **dadurch gekennzeichnet, dass** zur Speicherung der die Benutzer (4a, 4b) bezeichnenden Alias-Namen sowie der vollständigen Rufnummern der Mobiltelefone (5, 6) der betreffenden Benutzer (4a, 4b) in einer Datenbank (2) eines Routerservers (1) das Mobiltelefon des betreffenden Benutzers (4a, 4b) Übertragungsmittel (3b, 23b) zur Übertragung seines Alias-Namens an den Routenserver (1), insbesondere beim Aufbau der ersten Zusammenschaltung, umfasst.

18. System nach einem der Ansprüche 16 oder 17, **dadurch gekennzeichnet, dass** der Alias-Name durch Hinzufügen eines Identifizierungskennzeichens, insbesondere eines Sterns *, zu einem Wort gebildet wird.

19. System nach einem der Ansprüche 16 oder 17, **dadurch gekennzeichnet, dass** der Alias-Name durch seine Position in der Nachricht, insbesondere die erste Position, definiert wird.

20. System nach einem der Ansprüche 16 bis 19, **dadurch gekennzeichnet, dass**
- die Speichermittel (2a) die Benutzeridentifikationen und/oder den Alias-Namen einer Gruppe sowie die Adressen des Servers speichern, auf dem sich die Gruppe und/oder die vollständigen Rufnummern der Mobiltelefone der Benutzer, die Mitglieder der Gruppe sind, befinden.

21. System nach einem der Ansprüche 16 bis 20, wobei die betreffenden Mobiltelefone (5, 6) eine Steuerung (9, 9a) "Antworten" umfassen, durch deren Betätigung das Senden einer Antwortnachricht an die vollständige Rufnummer des Absenders der ursprünglichen Nachricht erfolgt,
wobei zur Übertragung der vom Empfänger (4b) erstellten Antwortnachricht an den Absender (4a) folgende Merkmale vorgesehen sind:
- Speichermittel (2a) des Routenservers (1) zur Speicherung der vollständigen Rufnummer des Mobiltelefons (5) des Absenders (4a) sowie der vollständigen Rufnummer des Mobiltelefons (6) des Empfängers (4b) im Routenserver (1), und
- Mobiltelefon-Speichermittel (10a, 10b) zur Speicherung der vollständigen Rufnummer des Routerservers (1) im Mobiltelefon (6) des Empfängers (4b).

22. System nach Anspruch 21, bei dem einem Empfänger (4b) ermöglicht wird, mehreren Absendern, die ihm eine oder mehrere Nachrichten gesendet haben, zu antworten, wobei der Routenserver (1) folgende Merkmale aufweist:
- mehrere Abgangsrufnummern,
- Rechenmittel (11), um jedem Absender (4a) verschiedene Abgangsrufnummern zuzuweisen, und
- Speichermittel (2a) zur Speicherung der vollständigen Rufnummern der von ihm gerouteten Nachrichten, wobei jeder Abgangsrufnummer ein bestimmter Speicherbereich zugewiesen wird.

23. System nach Anspruch 22, **dadurch gekennzeichnet, dass** die Speichermittel (2a) des Routenservers (1) die vollständige Rufnummer des Absenders (4a) der letzten Nachricht, die er über eine bestimmte Abgangsrufnummer routet, speichern.

24. System nach einem der Ansprüche 22 oder 23, bei dem der Routenserver (1) Mittel (12) umfasst, um die vollständigen Rufnummern der Absender, denen der Empfänger (4b) nicht geantwortet hat, nach Ablauf eines bestimmten Zeitraumes zu löschen.

25. System nach einem der Ansprüche 22 bis 24, bei dem der Routenserver (1) Mittel (12) umfasst, um die vollständige Rufnummer des ältesten Absenders (4a), dem der Empfänger (4b) nicht geantwortet hat, zu löschen.

26. System nach einem der Ansprüche 22 bis 25, bei dem der Routenserver (1) Mittel (12) umfasst, um die vollständige Rufnummer des Absenders (4a), dem der Empfänger (4b) nicht geantwortet hat, zu löschen.

27. System nach Anspruch 21, bei dem insbesondere einem Empfänger (4b), der Mitglied eines Forums ist, ermöglicht wird, Nachrichten von diesem Forum zu empfangen und auf diese zu antworten, wobei der Routenserver (1) eine gemeinsame Abgangsrufnummer für alle Nachrichten des Forums umfasst.

28. System nach einem der Ansprüche 21 bis 27, **dadurch gekennzeichnet, dass** die Abgangsrufnummem des Routenservers (1) insbesondere in Form von Multiplexkanälen vorliegen.

29. System nach einem der Ansprüche 16 bis 28, **dadurch gekennzeichnet, dass** die betreffenden Mobiltelefone des Systems für den anonymen Austausch von Audionachrichten folgende Merkmale aufweisen:
- Sendemittel (3, 23) zum Senden des Alias-Namens des Empfängers (4b) oder der Gruppe oder des Forums im DTMF-Modus, und
- Übertragungsmittel (3b, 23b) zur Übertragung des Alias-Namens im DTMF-Modus an einen Sprach-Routenserver (1b).

30. System nach Anspruch 29, **dadurch gekennzeichnet, dass** zum Senden des Alias-Namens des Empfängers (4b) oder der Gruppe oder des Forums im DTMF-Modus
- der Sprach-Routenserver (1b) Übertragungsmittel (16) umfasst, um eine Sendeabfrage des Alias-Namens im DTMF-Modus an das Mobiltelefon (5) des Empfängers (4a) zu senden, und
- das Mobiltelefon (5) Dateneingabemittel (17), insbesondere eine Tastatur, umfasst.

31. Routenserver (1) zur Durchführung eines anonymen Nachrichtenaustausches für Benutzer (4a, 4b) von Mobiltelefonen (5, 6) unter Verwendung einfacher Steuerungen ohne Notwenigkeit einer Benutzung von Schlüsselwörtern, mit
- Speichermitteln (2a) zur Speicherung der die Benutzer (4a, 4b) bezeichnenden Alias-Namen sowie der vollständigen Rufnummern der Mobiltelefone (5, 6) der betreffenden Benutzer (4a, 4b) in einer Datenbank (2) des Routenservers (1),
wobei der Absender (4a) einem Empfänger (4b) einen Nachrichtentext mit dem Alias-Namen des Empfängers (4b) schickt;
wobei der Empfänger (4b) dem Absender (4a) eine Antwortnachricht schickt, und
wobei der Routenserver (1) folgende weitere Merkmale aufweist:
- Empfangsmittel (18) zum Empfangen des Nachrichtentextes sowie der Nachricht,
- Erkennungsmittel (7), um in dem Nachrichtentext das Vorliegen eines Alias-Namens zu erkennen und in der Datenbank (2) die vollständige Rufnummer des Mobiltelefons (6) des Empfängers (4b) zu suchen,
- Routingmittel (8), um die genannte Nachricht an das Mobiltelefon (6) des Empfängers (4b) zu routen.

32. Routenserver (1) nach Anspruch 31, **dadurch gekennzeichnet, dass** die Mobiltelefone (5, 6) der betreffenden Benutzer (4a, 4b) zur Speicherung der die Benutzer bezeichnenden Alias-Namen sowie der vollständigen Rufnummern der Mobiltelefone (5, 6) der betreffenden Benutzer (4a, 4b) in einer Datenbank (2) des Routenservers (1) ihren Alias-Namen an den Routenserver (1), insbesondere beim Aufbau der ersten Zusammenschaltung, übermitteln.

33. Routenserver (1) nach einem der Ansprüche 31 oder 32, **dadurch gekennzeichnet, dass** der Alias-Name durch Hinzufügen eines Identifizierungskennzeichens, insbesondere eines Sterns *, zu einem Wort gebildet wird.

34. Routenserver (1) nach einem der Ansprüche 31 oder 32, **dadurch gekennzeichnet, dass** der Alias-Name durch seine Position in der Nachricht, insbesondere die erste Position, definiert wird.

35. Routenserver (1) nach einem der Ansprüche 31 bis 34, **dadurch gekennzeichnet, dass** die Speichermittel (2a) die Benutzeridentifikationen und/oder den Alias-Namen einer Gruppe sowie die Adressen des Servers speichern, auf dem sich die Gruppe und/oder die vollständigen Rufnummern der Mobiltelefon der Benutzer, die Mitglieder der Gruppe sind, befinden.

36. Routenserver (1) nach einem der Ansprüche 31 bis 35,
wobei die Mobiltelefone (5, 6) eine Steuerung (9, 9a) "Antworten" umfassen, durch deren Betätigung das Senden einer Antwortnachricht an die vollständige Rufnummer des Absenders der ursprünglichen Nachricht bewirkt wird,
wobei der Routenserver (1) Speichermittel (2a) umfasst, um die vollständige Rufnummer des Mobiltelefons (5) des Absenders (4a) sowie die vollständige Rufnummer (6) des Empfängers (4b) zu speichern, und
wobei das Mobiltelefon (6) des Empfängers (4b) die vollständige Rufnummer des Routenservers (1) speichert.

37. Routenserver (1) nach Anspruch 36, bei dem einem Empfänger (4b) ermöglicht wird, mehreren Absendern, die ihm eine oder mehrere Nachrichten gesendet haben, zu antworten, wobei der Routenserver (1) folgende Merkmale aufweist:
- mehrere Abgangsrufnummern,
- Rechenmittel (11), um jedem Absender (4a) verschiedene Abgangsrufnummern zuzuweisen, und
- Speichermittel (2a) zur Speicherung der vollständigen Rufnummern der von ihm gerouteten Nachrichten, wobei jeder Abgangsrufnummer ein bestimmter Speicherbereich zugewiesen wird.

38. Routenserver (1) nach Anspruch 37, **dadurch gekennzeichnet, dass** die Speichermittel (2a) des Routenservers (1) die vollständige Rufnummer des Absenders (4a) der letzten Nachricht, die er über eine bestimmte Abgangsrufnummer routet, speichern.

39. Routenserver (1) nach einem der Ansprüche 37 oder 38, mit Mitteln (12) zum Löschen der vollständigen Rufnummern der Absender, denen der Empfänger (4b) nicht geantwortet hat, nach Ablauf eines bestimmten Zeitraumes.

40. Routenserver (1) nach einem der Ansprüche 37 bis 39, mit Mitteln (12) zum Löschen der vollständigen Rufnummer des ältesten Absenders (4a), dem der Empfänger (4b) nicht geantwortet hat.

41. Routenserver (1) nach einem der Ansprüche 37 bis 40, mit Mitteln (12) zum Löschen der vollständigen Rufnummer des Absenders (4a), dem der Empfänger (4b) nicht geantwortet hat.

42. Routenserver (1) nach Anspruch 36, bei dem insbesondere einem Empfänger (4b), der Mitglied eines Forums ist, ermöglicht wird, Nachrichten von diesem Forum zu empfangen und auf diese zu antworten.

43. Routenserver (1) nach einem der Ansprüche 36 bis 42, **dadurch gekennzeichnet, dass** die Abgangsrufnummern des Routenservers (1) insbesondere in Form von Multiplexkanälen vorliegen.

44. Routenserver (1) nach einem der Ansprüche 31 bis 43, insbesondere für den anonymen Austausch von Audionachrichten, wobei die Mobiltelefone Sendemittel (3, 23) zum Senden des Alias-Namens des Empfängers (4b) oder der Gruppe oder des Forums im DTMF-Modus und Übertragungsmittel (3b, 23b) zur Übertragung des Alias-Namens im DTMF-Modus an den Routenserver (1) umfassen.

45. Routenserver (1) nach Anspruch 44, **dadurch gekennzeichnet, dass** der Routenserver (1) zum Senden des Alias-Namens des Empfängers (4b) oder der Gruppe oder des Forums im DTMF-Modus Übertragungsmittel (1) zum Versenden einer Sendeabfrage des Alias-Namens im DTMF-Modus an das Mobiltelefon (5) des Absenders (4a) umfasst, wobei das Mobiltelefon (5) des Absenders (4a) Dateneingabemittel (17), insbesondere eine Tastatur, aufweist.

## Claims

1. A method enabling users (4a, 4b) of mobile telephones (5, 6) to anonymously exchange messages by using simple commands not requiring the use of keywords;
said method comprising the following steps :
- step I of sending to an addressee user (4b) a text or audio message created by a sender user (4a),
- step II of replying to the sender user (4a) by addressing a reply-message to him that is created by the addressee user (4b),
step I of sending to the addressee user (4b) a message created by a sender user (4a) comprising the following steps:
- the step of storing in a database (2) of a server-router (1) the aliases designating the users (4a, 4b) as well as the telephone addresses of the mobile telephones (5, 6) of said users (4a, 4b),
- the step of inserting, by means of the mobile telephone (5) of the sender user (4a), the alias of the addressee user (4b) in a text-message associated with said message,
- the step of transmitting, by means of said sender user's (4a) mobile telephone (5), said text-message to said server-router (1) together with the message,
- the step, for said server-router (1), of detecting in said text-message the presence of an alias and searching in said database (2) the telephone address of the addressee user's (4b) mobile telephone (6),
- the step, for said server router (1), of routing said message to said addressee user's (4b) mobile telephone (6).

2. A method according to Claim 1 such that the memorisation step in a database (2) of a server-router (1) of aliases designating the users (4a, 4b) as well as the telephone addresses of the mobile telephones (5, 6) of said users (4a, 4b) comprises:
- the step by the concerned user (4a or 4b) of transmitting his alias to the server-router (1), in particular at the time of establishment of the first interconnection.

3. A method according to any one of Claims 1 or 2 such that the alias is composed by adding to a word a marker such as in particular an asterisk *.

4. A method according to any one of Claims 1 or 2 such that the alias is defined by its position in the message, in particular at the beginning.

5. A method according to any one of Claims 1 to 4 such that the step of memorising in a database (2) of a server-router (1) aliases designating the users (4a, 4b) as well as the telephone addresses of the mobile telephones (5, 6) of said users comprises:
- the step of memorising the identifiers and / or the alias of a group as well as the addresses of the server hosting the group and / or the telephone addresses of the mobile telephones of the users members of the group.

6. A method according to any one of Claims 1 to 5; said mobile telephones (5, 6) comprising a command (9, 9a) "reply" which actuation causes the sending of a reply-message to the telephone address of the sender of the original message;
in which the step II of replying to the sender user (4a) by addressing to him a reply-message created by the addressee user (4b) comprises the following steps:
- the step of storing on the server-router (1) the telephone address of the mobile telephone (5) of the sender user (4a) as well as the telephone address of the mobile telephone (6) of the addressee user (4b),
- the step of memorising in the mobile telephone (6) of the addressee user (4b) the telephone address of the server-router (1).

7. A method according to Claim 6 more particularly intended to enable an addressee user (4b) to reply to a plurality of sender users who have sent to him one or a plurality of messages;
in which
- in order to transmit to the addressee user (4b) the messages coming from the different sender users, the server-router (1) uses different output telephone addresses for each sender user (4a),
- the server-router (1) stores the telephone addresses of the sender users of the messages that it routes, by assigning a defined memory area for each output telephone address.

8. A method according to Claim 7 in which the server-router (1) stores the telephone address of the sender user (4a) of the last message that it routes via a particular output telephone address.

9. A method according to any one of Claims 7 or 8, in which the server-router (1) deletes after a defined period of time the telephone addresses of the sender users to whom the addressee user (4b) has not replied.

10. A method according to any one of Claims 7 to 9, in which the server-router (1) deletes the telephone address of the oldest sender user to whom the addressee user (4b) has not replied.

11. A method according to any one of Claims 7 to 10, in which the server-router (1) deletes the telephone address of the sender user to whom the addressee user (4b) has replied.

12. A method according to Claim 6 more particularly intended to enable an addressee user (4b) member of a forum to receive messages from the forum and to reply;
in which
- in order to transmit to the addressee user (4b) the messages coming from the forum the server-router (1) uses a common output telephone address for all of the forum messages.

13. A method according to any one of Claims 6 to 12 such that the output telephone addresses of the server-router (1) are presented in particular in the form of multiplexing channels.

14. A method according to any one of Claims 1 to 13, such that in order to exchange anonymously audio messages, said method comprises the following step:
- the step of transmitting in DTMF mode the alias of the addressee user (4b) or of the group or of the forum;
- the step of transmitting the alias in DTMF mode to a voice-server-router (1b).

15. A method according to Claim 14 such that in order to transmit in DTMF mode the alias of the addressee user (4b) or of the group or of the forum, said method comprises the following steps:
- the step of sending to the mobile telephone (5) of the sender user (4a), from the voice-server-router (1b), a send request for the alias in DTMF mode,
- the step of entering by means of the keypad (17) of the mobile telephone of the sender user (4a) the first letter of the alias of the addressee user (4b) and so on.

16. A system enabling the users (4a, 4b) of mobile telephones (5, 6) to anonymously exchange messages by using simple commands not requiring the use of keywords;
said system comprising:
- storing means (2a) for storing in a database (2) of a server-router (1) aliases designating the users (4a, 4b) as well as the telephone addresses of the mobile telephones (5, 6) of said users (4a, 4b),
- sending means (3, 23) for sending to an addressee user (4b) a message created by a sender user (4a),
- replying means (9, 9a) for addressing to the sender user (4a) a reply-message created by the addressee user (4b);
said sending means (3) for sending to an addressee user (4b) a message created by a sender user (4a) comprising
- inserting means (3a, 23a) for inserting the alias of an addressee user (4b) into a text-message associated with said message;
- transmitting means (3b, 23b) for transmitting said text-message to said server-router (1) as well as the message;
said server-router (1) comprising:
- detecting means (7) for detecting in said text-message the presence of an alias and searching in said database (2) the telephone address of the mobile telephone (6) of the addressee user (4b),
- routing means (8) for routing said message to said mobile telephone (6) of the addressee user (4b).

17. A system according to Claim 16 such that in order to store in the database (2) of a server-router (1) the aliases designating the users (4a, 4b) as well as the telephone addresses of the mobile telephones (5, 6) of said users (4a, 4b),
- the mobile telephone of the concerned users (4a, 4b) comprises transmission means (3b, 23b) for transmitting his. alias to the server-router (1) in particular at the time of establishing the first interconnection.

18. A system according to any one of Claims 16 or 17, such that the alias is composed by adding to a word a marker such as in particular an asterisk *.

19. A system according to any one of Claims 16 or 17, such that the alias is defined by its position in the message, in particular at the beginning.

20. A system according to any one of the claims 16 to 19 such that
- said storage means (2a) storing the identifiers and / or the alias of a group as well as the addresses of the server hosting the group and / or the telephone addresses of the mobile telephones of the users members of the group.

21. A system according to any one of Claims 16 to 20; said mobile telephones (5, 6) comprising a command (9, 9a) "reply" which actuation causes sending of a reply-message to the telephone address of the sender of the original message;
in order to transmit to the sender user (4a) said reply message created by the addressee user (4b) said system comprising:
- server-router-storage (1) means (2a) for storing on the server-router (1) the telephone address of the mobile telephone (5) of the sender user (4a) as well as the telephone address of the mobile telephone (6) of the addressee user (4b),
- mobile-telephone-memorisation means (10a, 10b) for storing in the mobile telephone (6) of the addressee user (4b) the telephone address of the server-router (1).

22. A system according to Claim 21 more particularly intended to enable an addressee user (4b) to reply to a plurality of sender users who have addressed one or a plurality of messages to him;
said system being such that the server-router (1) comprises:
- a plurality of output telephone addresses, and
- calculation means (11) for assigning different output telephone addresses for each sender user (4a), and
- storing means (2a) for storing the telephone addresses of the sender users of the messages that it routes, by allocating a defined memory area for each output telephone address.

23. A system according to Claim 22 such that the server-router-storage (1) means (2a) store the telephone address of the sender user (4a) of the last message that it routes via a particular output telephone address.

24. A system according to any one of Claims 22 or 23, in which the server-router (1) comprises deleting means (12) for deleting after a defined period of time the telephone addresses of sender users to whom the addressee user (4b) has not replied.

25. A system according to any one of Claims 22 to 24, in which the server-router (1) comprises deleting means (12) for deleting the telephone address of the oldest sender user (4a) to whom the addressee user (4b) has not replied.

26. A system according to any one of.Claims 22 to 25, in which the server-router (1) comprises deleting means (12) for deleting the telephone address of the sender user (4a) to which the addressee user (4b) has replied.

27. A system according to Claim 21 more particularly intended to enable an addressee user (4b) member of a forum to receive messages from the forum and to reply;
in which the server-router (1) comprises a common output telephone address for all of the forum messages.

28. A system according to any one of Claims 21 to 27, such that the output telephone addresses of the server-router (1) are presented particularly in the form of multiplexing channels.

29. A system according to any one of Claims 16 to 28, such that in order to anonymously exchange audio messages said mobile telephones of said system comprise:
- sending means (3, 23) for sending in DMTF mode the alias of the addressee user (4b) or of the group or of the forum,
- transmitting means (3b, 23b) for transmitting the alias in DTMF mode to a voice-server-router (1b).

30. A system according to Claim 29, such that for sending in DTMF mode the alias of the addressee user (4b) or of the group or of the forum,
- said voice-server-router (1b) comprises transmitting means (16) for sending to the mobile telephone (5) of the sender user (4a) an alias send request in DTMF mode,
- said mobile telephone (5) comprises data entry means (17), in particular a keypad.

31. A server-router (1) enabling users (4a, 4b) of mobile telephones (5, 6) to anonymously exchange messages by using simple commands not requiring the use of keywords;
said server-router (1) comprising:
- storage means (2a) for storing in a database (2) aliases designating the users (4a, 4b) as well as the telephone addresses of the mobile telephones (5, 6) of said users (4a, 4b);
said sender user (4a) sending to an addressee user (4b) a text-message comprising the alias of the addressee user (4b);
said addressee user (4b) addressing to the sender user (4a) reply-message;
said server-router (1) further comprising:
- receiving means (18) for receiving said text-message as well as the message,
- detecting means (7) for detecting in said text-message the presence of an alias and searching in the database (2) for the telephone address of the mobile telephone (6) of the addressee user (4b),
- routing means (8) for routing said message to said mobile telephone (6) of the addressee user (4b).

32. A server-router (1) according to Claim 31, such that for storing in a database (2) of the server-router (1) aliases designating the users as well as the telephone addresses of the mobile telephones (5, 6) of said users (4a, 4b), the mobile telephones.(5, 6) of the concerned users (4a, 4b) transmit their alias to the server-router (1) in particular at the time of establishing the first interconnection.

33. A server-router (1) according to any one of Claims 31 or 32, such that the alias is composed by adding to a word a marker such as in particular an asterisk *.

34. A server-router (1) according to any one of Claims 31 or 32, such that the alias is defined by its position in the message, in particular at the beginning.

35. A server-router (1) according to any one of the claims 31 to 34, such that
- said storage means (2a) storing the identifiers and / or the alias of a group as well as the addresses of the server hosting the group and / or the telephone addresses of the mobile telephones of the users members of the group.

36. A server-router (1) according to any one of Claims 31 to 35; said mobile telephones (5, 6) comprising a command "reply" which actuation causes sending of a reply message to the telephone address of the sender of the original message;
said server-router (1) comprising storage means (2a) for storing on the telephone address of the mobile telephone (5) of the sender user (4a) as well as the telephone address of the mobile telephone (6) of the addressee user (4b);
the mobile telephone (6) of the addressee user (4b) memorising the telephone address of the server-router (1).

37. A server-router (1) according to Claim 36 more particularly intended to enable an addressee user (4b) to reply to a plurality of sender users who have addressed to him one or a plurality of messages;
said server-router (1) comprising:
- a plurality of output telephone addresses, and
- calculation means (11) for assigning different output telephone addresses for each sender user (4a), and
- storing means (2a) for storing the telephone addresses of the sender users of the messages that it routes, by allocating a defined memory area for each output telephone address.

38. A server-router (1) according to Claim 37 such that the server-router (1) storage means (2a) store the telephone address of the sender user (4a) of the last message that it routes via a particular output telephone address.

39. A server-router (1) according to any one of Claims 37 or 38, comprising deleting means (12) for deleting after a defined period of time the telephone addresses of sender users to whom the addressee user (4b) has not replied.

40. A server-router (1) according to any one of Claims 37 to 39, comprising deleting means (12) for deleting the telephone address of the oldest sender user (4a) to whom the addressee user (4b) has not replied.

41. A server-router (1) according to any one of Claims 37 to 40, comprising deleting means (12) for deleting the telephone address of the sender user (4a) to whom the addressee user (4b) has replied.

42. A server-router (1) according to Claim 36 more particularly intended to enable an addressee user (4b) member of a forum to receive messages from the forum and to reply;
the server-router (1) comprising a common output telephone address for all of the forum messages.

43. A server-router (1) according to any one of Claims 36 to 42 such that the output telephone addresses of the server-router (1) are presented particularly in the form of multiplexing channels.

44. A server-router (1) according to any one of Claims 31 to 43 more particularly conceived in order to anonymously exchange audio messages; said mobile telephones comprising sending means (3, 23) for sending in DTMF mode the alias of the addressee user (4b) or of the group or of the forum and the transmitting means (3b, 23b) for transmitting the alias in DTMF mode to a server-router (1).

45. A server-router according to Claim 44 such that for sending in DTMF mode the alias of the addressee user (4b) or of the group or of the forum;
said server-router (1) comprising transmitting means (16) for sending to the mobile telephone (5) of the sender user (4a) an alias send request in DTMF mode;
said mobile telephone (5) comprises data entry means (17), in particular a keypad.
